(19) Europäisches Patentamt
European Patent Office
Office européen des brevets

(11) **EP 3 073 010 A1**

(12) **EUROPEAN PATENT APPLICATION**
published in accordance with Art. 153(4) EPC

(43) Date of publication:
**28.09.2016 Bulletin 2016/39**

(51) Int Cl.:
**D06M 15/572** (2006.01)   **C08G 18/44** (2006.01)
**D06M 15/568** (2006.01)   **D06N 3/14** (2006.01)

(21) Application number: **14863322.5**

(22) Date of filing: **14.11.2014**

(86) International application number:
**PCT/JP2014/080213**

(87) International publication number:
**WO 2015/076204 (28.05.2015 Gazette 2015/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.11.2013   JP 2013240561**

(71) Applicant: **Toray Industries, Inc.**
**Tokyo 103-8666 (JP)**

(72) Inventors:
• **MURAHARA, Hisashi**
**Anpachi-gun**
**Gifu 503-2395 (JP)**

• **NAKAI, Shunichiro**
**Anpachi-gun**
**Gifu 503-2395 (JP)**
• **MATSUZAKI, Yukihiro**
**Anpachi-gun**
**Gifu 503-2395 (JP)**
• **NISHIMURA, Makoto**
**Otsu-shi**
**Shiga 520-8558 (JP)**

(74) Representative: **Hoefer & Partner Patentanwälte mbB**
**Pilgersheimer Straße 20**
**81543 München (DE)**

(54) **SHEET-LIKE ARTICLE**

(57)    The present invention provides a sheet-like article including a fibrous base and a polyurethane resin, which sheet-like article has good texture with excellent crease recovery and exhibits excellent durability and light resistance. The sheet-like article of the present invention includes: a fibrous base including ultrafine fibers; and a polyurethane resin as a binder to the fibrous base, wherein the polyurethane resin includes a polymer polyol-derived structure that includes a polycarbonate polyol-derived structure, and the polyurethane resin satisfies the following (I), (II) and (III) or (IV): (I) the polyurethane resin includes a carbonate bond, and an ether bond and/or an ester bond in the molecule; (II) the total content of urethane group and urea group in the polyurethane resin is 7 to 11% by mass; and (III) 80 to 100% by mass of a polycarbonate polyol yielding the polycarbonate polyol-derived structure is a polycarbonate polyol having a melting point of 20°C or lower; or (IV) 80 to 100% by mass of a polycarbonate polyol yielding the polycarbonate polyol-derived structure is a polycarbonate polyol copolymerized with two or more polyhydric alcohols having different carbon skeletons.

EP 3 073 010 A1

**Description**

TECHNICAL FIELD

The present invention relates to a sheet-like article that comprises a fibrous base and a polyurethane resin. Particularly, the present invention relates to a sheet-like article that has good surface quality and texture and exhibits excellent durability and light resistance.

BACKGROUND ART

Sheet-like articles that are mainly composed of a fibrous base made of a fabric such as a nonwoven fabric and a polyurethane resin have excellent features that are not seen in natural leathers; therefore, such sheet-like articles are widely utilized in a variety of applications including artificial leathers. Particularly, sheet-like articles comprising a polyester fibrous base have excellent light resistance, and their use has thus been expanded year after year to applications such as clothing, chair upholstery and automobile interior materials.

In those applications such as automobile interior materials where durability is particularly required, as a polyurethane resin to be impregnated into the fibrous base of an artificial leather, one that is produced using a polycarbonate polyol as a raw material is used.

Further, for the purpose of improving the texture of an artificial leather in which a polyurethane resin comprising a polycarbonate polyol is adopted, the use of a polycarbonate polyol, which is in an amorphous polyol that is liquid at normal temperature due to copolymerization with a linear carbonate polyol whose polymer structural units have different numbers of carbon atoms, has been proposed (see Patent Document 1).

Meanwhile, as solvents of polyurethane resins, organic solvents such as *N,N*-dimethylformamide are conventionally used; however, environmentally friendly water-dispersed polyurethanes obtained by dispersing a polyurethane resin in water have been proposed. For the purpose of improving the texture of an artificial leather in which such a water-dispersed polyurethane resin comprising a polycarbonate polyol is applied, there has been proposed a technology of reducing the area of adhesion between a fibrous base and a polyurethane resin and thereby imparting the polyurethane resin with a porous structure (see Patent Document 2).

In addition, a method of improving the texture of an artificial leather by using a polyurethane emulsion, which is obtained by mixing a polyurethane emulsion composed of a polycarbonate polyol and another polyurethane emulsion having a lower modulus value than the other polyurethane emulsion, as a polyurethane liquid to be impregnated into a fibrous base has been proposed (see Patent Document 3).

PRIOR ART REFERENCES

PATENT DOCUMENTS

[Patent Document 1] Japanese Patent Application Laid-Open Publication (JP-A) No. H5-43647
[Patent Document 2] Japanese Patent Application Laid-Open Publication (JP-A) No. 2011-214210
[Patent Document 3] Japanese Patent Application Laid-Open Publication (JP-A) No. 2013-112905

SUMMARY OF THE INVENTION

PROBLEMS TO BE SOLVED BY THE INVENTION

However, although a sheet-like article utilizing the polyurethane resin of Patent Document 1 has excellent durability and an improved texture, its flexibility and crease recovery are poor as compared to those of an artificial leather impregnated with a polyurethane resin comprising a polyether polyol, and there is still room for improvement.

Therefore, an object of the present invention is to provide a sheet-like article which has uniform and elegant surface quality and soft texture with excellent crease recovery and exhibits excellent durability and light resistance.

MEANS FOR SOLVING THE PROBLEMS

The present invention is the following sheet-like article.

(1) A sheet-like article comprising: a fibrous base comprising ultrafine fibers; and a polyurethane resin as a binder to the fibrous base, wherein the polyurethane resin comprises a polymer polyol-derived structure that comprises a polycarbonate polyol-derived structure, and the polyurethane resin satisfies the following (I), (II) and (III) or (IV):

> (I) the polyurethane resin comprises a carbonate bond, and an ether bond and/or an ester bond in the molecule;
> (II) the total content of urethane group and urea group in the polyurethane resin is 7 to 11 % by mass; and
> (III) 80 to 100% by mass of a polycarbonate polyol yielding the polycarbonate polyol-derived structure is a polycarbonate polyol having a melting point of 20°C or lower; or
> (IV) 80 to 100% by mass of a polycarbonate polyol yielding the polycarbonate polyol-derived structure is a polycarbonate polyol copolymerized with two or more polyhydric alcohols having different carbon skeletons.

Preferred embodiments of the sheet-like article of the present invention include the followings.

> (2) The above-described sheet-like article, which satisfies the (I) to (IV);
> (3) Any of the above-described sheet-like articles, which has a compression ratio of 13 to 20% and a compressive elastic modulus of 55 to 75%;
> (4) Any of the above-described sheet-like articles, wherein 20 to 90% by mass of the polymer polyol-derived structure contained in the polyurethane resin is derived from a polycarbonate polyol;
> (5) Any of the above-described sheet-like articles, wherein 20 to 80% by mass of the polymer polyol-derived structure contained in the polyurethane resin is derived from a polycarbonate polyol;
> (6) The sheet-like article according to any one of claims 1 to 4, wherein the polymer polyol-derived structure contained in the polyurethane resin comprises structures derived from a polycarbonate polyol and a polyether polyol;
> (7) Any of the above-described sheet-like articles, wherein the binder further comprises an anionic emulsifying agent and/or a cationic emulsifying agent;
> (8) Any of the above-described sheet-like articles, wherein the polyurethane resin has a storage elastic modulus of 1 to 70 MPa and a tan $\delta$ value of 0.05 to 0.30 at 20°C; and
> (9) Any of the above-described sheet-like articles, wherein the polycarbonate polyol having a melting point of 20°C or lower or the polycarbonate polyol copolymerized with two or more polyhydric alcohols having different carbon skeletons, which constitutes the polyurethane resin, has a viscosity of 10,000 to 50,000 mPa·s at 40°C.

EFFECTS OF THE INVENTION

According to the present invention, a sheet-like article which has uniform and elegant surface quality and soft texture with excellent crease recovery and exhibits excellent durability and light resistance can be obtained.

MODE FOR CARRYING OUT THE INVENTION

[Sheet-like Article]

The sheet-like article of the present invention comprises: a fibrous base comprising ultrafine fibers; and a polyurethane resin as a binder to the fibrous base. A hydroxyl group and an isocyanate group that are bound to an organic compound react with each other to form a urethane bond. Thus, the polyurethane resin is prepared using a compound having at least two hydroxyl groups (polyol) as a raw material. The polyurethane resin of the present invention comprises a polymer polyol-derived structure, and this polymer polyol-derived structure comprises a polycarbonate polyol-derived structure.

Further, this polyurethane resin satisfies the following (I) to (III):

> (I) the polyurethane resin comprises a carbonate bond, and an ether bond and/or an ester bond in the molecule;
> (II) 80 to 100% by mass of a polycarbonate polyol yielding the polycarbonate polyol-derived structure is a polycarbonate polyol having a melting point of 20°C or lower; and
> (III) the total content of urethane group and urea group in the polyurethane resin is 7 to 11 % by mass.

[Fibrous Base]

First, the fibrous base of the present invention will be described.

The fibrous base used in the present invention can be any fabric such as a woven fabric, a knitted fabric or a nonwoven fabric. Particularly, a nonwoven fabric is preferably used because it allows the sheet-like article to have good surface quality after a surface napping treatment. In the fibrous base of the present invention, as appropriate, a woven fabric, a knitted fabric, a nonwoven fabric and the like can be used in combination as a laminate.

The nonwoven fabric used in the present invention may be either a short-fiber nonwoven fabric or a filament nonwoven fabric; however, from the standpoint of attaining uniform nap length and high surface quality, a short-fiber nonwoven fabric is preferably used.

The length of the short fibers in the short-fiber nonwoven fabric is preferably 25 mm to 90 mm, more preferably 35 mm to 75 mm. By controlling the length of the short fibers in this range, the short fibers are allowed to entangle with each other, so that a sheet-like article having high abrasion resistance and excellent quality can be obtained.

As the fibers constituting the fibrous base, fibers made of a thermoplastic resin that can be melt-spun, such as polyester (e.g., polyethylene terephthalate, polybutylene terephthalate, polytrimethylene terephthalate or polylactic acid), polyimide (e.g., 6-nylon or 66-nylon), acryl, polyethylene, polypropylene or thermoplastic cellulose, can be used. Among such fibers, from the standpoints of strength, dimensional stability and light resistance, polyester fibers are preferably used. The fibrous base may also be constituted by a mixture of fibers made of different materials.

The cross-sectional shape of the fibers used in the present invention may be circular; however, fibers having a modified cross-sectional shape, for example, an elliptical shape, a flat shape, or a polygonal shape such as a triangular shape, a fan shape or a cruciate shape, can also be used.

The fibers constituting the fibrous base have a number-average fiber diameter of 7 $\mu$m or less, preferably 5 $\mu$m or less. Fibers of such a thickness are regarded as "ultrafine fibers". The lower limit of the number-average fiber diameter is not particularly restricted; however, it may be 0.3 $\mu$m or larger, preferably 0.8 $\mu$m or larger. In the case of fibers having a modified cross-sectional shape, the average fiber diameter thereof is defined as the diameter of a circle that gives the same area as the area of the cross-section. By controlling the average diameter of the fibers to be not larger than the value indicated above as the upper limit, a softer feel is imparted to the fibrous base. Further, by controlling the average diameter of the fibers to be not smaller than the value indicated above as the lower limit, superior post-dyeing color development is attained.

In the present invention, when the fibrous base is a nonwoven fabric, in order to improve the strength of the sheet-like article, a woven fabric or a knitted fabric may be used in combination with the nonwoven fabric. Such a combination of the nonwoven fabric and a woven fabric or a knitted fabric can be provided by either laminating the woven fabric or knitted fabric on the nonwoven fabric or inserting the woven fabric or knitted fabric into the nonwoven fabric. A woven fabric is preferably used because of its shape stability and high strength-improving effect.

Examples of single yarns (warp and weft yarns) constituting the woven fabric or knitted fabric include synthetic fibers such as polyester fibers and polyamide fibers. From the standpoint of color fastness, it is preferred to use single yarns made of the same material as the ultrafine fibers that eventually constitute a fabric such as a nonwoven fabric.

Examples of the mode of such single yarns include filament yarns and spun yarns, and hard twist yarns thereof are preferably used. Further, filament yarns are also preferably used because they exhibit limited surface nap detachment.

In cases where hard twist yarns are used, the number of twists is preferably 1,000 to 4,000 T/m, more preferably 1,500 to 3,500 T/m. When the number of twists is excessively small, breakage of the filaments constituting the hard twist yarns caused by a needle-punching process performed for the formation of a nonwoven fabric is increased, so that the physical properties of the resulting product tend to be deteriorated and exposure of the filaments to the surface of the product tends to be increased. Meanwhile, when the number of twists is excessively large, although breakage of the filaments is inhibited, since the hard twist yarns are stiff, the texture of the resulting sheet-like article tends to be hardened.

The above-described hard twist yarns have a diameter of preferably 80 to 200 $\mu$m, more preferably 120 to 180 $\mu$m. When the twist yarns have an excessively small single yarn diameter, in a dyeing process, shrinkage of the twist yarns may cause distortion of the woven fabric or knitted fabric. Meanwhile, when the single yarn diameter of the twist yarns is excessively large, distortion of the woven fabric or knitted fabric in the dyeing step can be suppressed; however, entanglement of the nonwoven fabric web and the woven fabric or knitted fabric, which is caused by a needle-punching process performed as one of the steps in the production of artificial leather, is insufficient and this tends to reduce the shape stability of the resulting product.

The fineness of the filaments constituting the hard twist yarns is preferably 0.5 to 20.0 $\mu$m, more preferably 2 to 15 $\mu$m. When the fineness of the filaments is excessively small, a needle-punching process performed in the production of artificial leather causes breakage of the filaments, so that the physical properties of the resulting product tend to be deteriorated. Meanwhile, when the fineness of the filaments is excessively large, due to the difference in dyeing properties between the filaments and the ultrafine fibers constituting the nonwoven fabric, exposure of the fibers constituting the woven fabric or knitted fabric to the product surface becomes more prominent and the product quality thus tends to be reduced.

As a material of the fibrous base, it is also preferred to use ultrafine fiber-generating fibers whose filaments each generate a plurality of fibers. By using such ultrafine fiber-generating fibers, a state where bundles of ultrafine fibers are entangled can be stably attained.

In cases where the fibrous base is a nonwoven fabric and ultrafine fibers are used therein, it is preferred that the bundles of the ultrafine fibers be entangled. By allowing the ultrafine fibers to entangle with one another in the form of bundles, the strength of the sheet-like article is improved. A nonwoven fabric in such a mode can be obtained by allowing ultrafine fiber-generating fibers to entangle with one another in advance and subsequently allowing the fibers to generated ultrafine fibers.

Examples of the ultrafine fiber-generating fibers include sea-island type composite fibers in which two thermoplastic resin components having different solubilities in solvents are used as sea and island components and the island component is converted into ultrafine fibers by dissolving and removing the sea component; and splittable composite fibers in which two thermoplastic resin components are alternately arranged in a radial or multilayer form along the fiber cross-section and ultrafine fibers are generated by splitting and separating the components.

Thereamong, sea-island type composite fibers are preferably used not only because they can provide ultrafine fibers with appropriate gaps therebetween when the sea component is removed, but also from the standpoints of the flexibility and texture of the resulting sheet-like article.

Examples of the sea-island type composite fibers include those obtained by melting the sea and island components using a die for sea-island type composites, extruding these two components separately from different outlets to alternately arrange the components and then spinning the resultant; and mix-spun fibers obtained by mixing and melting the sea and island components and extruding the resultant from a single outlet, followed by spinning. From the standpoints of obtaining ultrafine fibers having uniform fineness with sufficient length and improving the strength of the sheet-like article, sea-island type composite fibers are preferably used.

As the sea component of the sea-island type composite fibers, for example, polyethylenes, polypropylenes, polystyrenes, polyesters copolymerized with sodium sulfoisophthalate, polyesters copolymerized with polyethylene glycol or the like, polylactic acids and polyvinyl alcohols can be used. Thereamong, polyesters copolymerized with alkali-degradable sodium sulfoisophthalate, polyesters copolymerized with polyethylene glycol, polylactic acids and polyvinyl alcohols are preferably used.

As for the ratio of the island component in the sea-island type composite fibers, the mass ratio of the island fibers is preferably 0.2 to 0.8, more preferably 0.3 to 0.7, with respect to the total mass of the sea-island type composite fibers. By controlling this mass ratio to be not lower than the above-described smaller value, the removal rate of the sea component can be reduced. Further, by controlling the mass ratio to be not higher than the above-described larger value, the opening property of the island fibers can be improved and confluence of the island component can be inhibited. The number of islands can be adjusted as appropriate based on the die design.

The ultrafine fiber-generating fibers of the sea-island type composite fibers and the like have a single fiber fineness of preferably 5 to 80 $\mu$m, more preferably 10 to 50 $\mu$m. When the single fiber fineness is excessively small, the fibers are weak, so that breakage of the filaments caused by the below-described needle-punching process and the like tends to be increased. Meanwhile, an excessively large single fiber fineness may prevent the fibers from being efficiently entangled by the needle-punching process or the like.

As a method for obtaining a nonwoven fabric as the fibrous base, for example, a method of entangling fiber webs by needle punching or water-jet punching can be employed. In addition, a spun-bonding method, a melt-blowing method and a paper-making method can also be employed. Thereamong, from the standpoint of obtaining ultrafine fibers in the form of bundles as described above, needle punching and water-jet punching are preferred.

Further, for integration of a nonwoven fabric with a woven fabric or a knitted fabric by lamination, from the standpoint of the entangling properties of their fibers, a needle-punching process and a water jet-punching process can be preferably employed. Particularly, a needle-punching process is preferred because it is not limited by the sheet thickness and is capable of orienting the fibers in the thickness direction of the fibrous base.

It is preferred that the needles used for the needle-punching process have 1 to 9 barbs. This allows the fibers to be entangled efficiently and damage to the fibers can thus be inhibited.

Considering the entangling properties of the fibers and the effect on the product outer appearance, the total depth of each barb (length from the tip to the bottom of each barb) is preferably 0.05 to 0.10 mm. By setting the total depth of each barb to be not less than the above-described smaller value, the fiber bundles can be sufficiently hooked, so that the fibers can be entangled efficiently. Meanwhile, when the barbs have a total depth greater than the above-described larger value, although more fibers are drawn into the fibrous base, needle marks are left on the fibrous base and the quality tends to be deteriorated. Considering the balance between the barb strength and the fiber entanglement, the total depth of each barb is preferably 0.06 to 0.08 mm or less.

Further, in cases where a nonwoven fabric and a woven fabric or a knitted fabric are entangled and integrated with each other, from the standpoint of inhibiting wrinkle generation in the process of integrating the nonwoven fabric and the woven fabric or knitted fabric by needle punching, it is desired that the nonwoven fabric be subjected to preliminary entanglement. When a method of performing preliminary entanglement by needle punching is employed in this manner, the preliminary entanglement is effectively performed at a punching density of not less than 20 needles/cm$^2$, preferably not less than 100 needles/cm$^2$, more preferably 300 to 1,300 needles/cm$^2$.

When the punching density of the preliminary entanglement is low, the width of the nonwoven fabric may be reduced during the entanglement with the woven fabric or knitted fabric or by the subsequent needle punching process. Such a change in the width leads to generation of wrinkles on the woven fabric or knitted fabric and this can make it unable to obtain a smooth fibrous base. Meanwhile, when the punching density is high, entanglement of the fibers constituting the nonwoven fabric generally progresses too much, which is disadvantageous for realizing an integral structure in which the nonwoven fabric and the woven fabric or knitted fabric are strongly entangled and not separable from each other.

In the present invention, when fibers are entangled by needle punching, regardless of the presence or absence of a woven fabric or knitted fabric, the punching density is preferably in a range of 300 to 6,000 needles/cm$^2$ and, in a more preferred embodiment, the punching density is 1,000 to 3,000 needles/cm$^2$.

For entanglement of a nonwoven fabric with a woven fabric or a knitted fabric, the woven fabric or knitted fabric is laminated on either or both sides of the nonwoven fabric or inserted between plural sheets of the nonwoven fabric, and the resulting laminate is subsequently needle-punched to entangle the fibers with each other, thereby a fibrous base can be prepared.

When water-jet punching is performed, it is preferred that water be jetted in a columnar form. Specifically, it is preferred that water is jetted from a nozzle of 0.05 to 1.0 mm in diameter at a pressure of 1 to 60 MPa.

After the needle-punching or water jet-punching process, the nonwoven fabric composed of ultrafine fiber-generating fibers has an apparent density of preferably 0.15 to 0.45 g/cm$^3$, more preferably 0.20 to 0.30 g/cm$^3$. By controlling the apparent density to be not less than the above-described smaller value, an artificial leather having sufficient shape stability and dimensional stability can be obtained. Meanwhile, by controlling the apparent density to be not higher than the above-described larger value, a sufficient space for incorporation of a polymer elastic material can be maintained.

From the standpoint of densification, it is preferred that the nonwoven fabric composed of ultrafine fiber-generating fibers obtained in the above-described manner be shrunk under dry heat and/or wet heat to have a higher density.

In cases where sea-island type composite fibers are used, the sea-removal treatment thereof may be performed before or after adding a polyurethane resin-containing composition to the fibrous base. By performing the sea-removal treatment before the addition of a polyurethane resin-containing composition, the polyurethane resin and ultrafine fibers are directly adhered with each other and the ultrafine fibers can thus be strongly held, so that the resulting sheet-like article has good abrasion resistance. Meanwhile, when the sea-removal treatment is performed after the addition of a polyurethane resin composition, since gaps are generated between the polyurethane resin and ultrafine fibers by the removal of sea component, the resulting sheet-like article has soft texture.

The sea-removal treatment can be performed by immersing the fibrous base containing sea-island type composite fibers into a solvent and subsequently removing liquid by squeezing. As the solvent used for dissolving the sea component, an organic solvent such as toluene or trichloroethylene can be used when the sea component is polyethylene, polypropylene or polystyrene. When the sea component is a copolymerized polyester or polylactic acid, an alkaline solution such as an aqueous sodium hydroxide solution can be used. When the sea component is a polyvinyl alcohol, hot water can be used.

The thickness of the fibrous base is preferably 0.3 to 6.0 mm, more preferably 1.0 mm to 3.0 mm. When the fibrous base is excessively thin, the shape stability of the sheet may be poor. Meanwhile, when the fibrous base is excessively thick, the use of the needle-punching step tends to result in frequent needle breakage.

[Polyurethane Resin]

The polyurethane resin used as a binder of the sheet-like article of the present invention is obtained by reaction of a polymer polyol comprising a polycarbonate polyol-derived structure, an organic polyisocyanate, and a chain extender that is added as required. The term "polymer polyol" used herein refers to a polyol whose main chain has a polymer structure. The polymer structure may be of a homopolymer or a copolymer. It is preferred that the polymer polyol have a number-average molecular weight (hereinafter, may be abbreviated as "Mn") of not less than 500.

It is indispensable that the polymer polyol used as a raw material of the polyurethane resin of the present invention have a polycarbonate polyol-derived structure, and the polymer polyol further contains one or two structures selected from polyester polyol-derived structures and polyether polyol-derived structures in the molecule. When a polyurethane resin in which the polymer polyol consists of only a polycarbonate polyol is used, since the polyurethane resin itself is hard, the texture of the resulting sheet-like article is hard as well. Meanwhile, when the polymer polyol component consists of only a polyester polyol, the resulting sheet-like article has poor hydrolysis resistance. Further, with a polyether polyol component alone, although the resulting sheet-like article has soft texture, the heat resistance and light resistance thereof are poor.

According to a preferred embodiment of the present invention, 20 to 90% by mass, preferably 20 to 80% by mass of the polymer polyol yielding the polyurethane resin component is a polycarbonate polyol. Polycarbonate polyols have excellent light resistance; however, they tend to make the texture of the resulting sheet-like article hard and, although a small amount of a polycarbonate polyol component imparts the sheet-like article with soft texture, the sheet-like article has poor light resistance. Meanwhile, an excessively large amount of a polycarbonate polyol component tends to make the texture of the sheet-like article hard.

Examples of the polycarbonate polyol include polycarbonate polyols that can be produced by condensation of one or more (preferably two to four) kinds of preferably polyhydric alcohols having 2 to 20 carbon atoms (more preferably aliphatic dihydric alcohols having 3 to 9 carbon atoms, still more preferably aliphatic dihydric alcohols having 4 to 6 carbon atoms) and a low-molecular-weight carbonate compound (e.g., a dialkyl carbonate whose alkyl groups have 1 to 6 carbon atoms, an alkylene carbonate whose alkylene group has 2 to 6 carbon atoms, or a diaryl carbonate whose aryl groups have 6 to 9 carbon atoms) through dealcoholization reaction.

Examples of the polyhydric alcohols having 2 to 20 carbon atoms include the followings:

i) linear or branched aliphatic dihydric alcohols having 2 to 12 carbon atoms

for example, linear alcohols such as ethylene glycol, 1,3-propylene glycol, 1,4-butanediol, 1,5-pentanediol, 1,6-hexanediol, 1,7-heptanediol, 1,8-octanediol, 1,9-nonanediol, 1,10-dodecanediol, diethylene glycol, triethylene glycol and tetraethylene glycol, and branched alcohols such as 1,2-, 1,3- or 2,3-butanediol, 2-methyl-1,4-butanediol, neopentyl glycol, 2,2-diethyl-1,3-propanediol, 2-methyl-1,5-pentanediol, 3-methyl-1,5-pentanediol, 2-methyl-1,6-hexanediol, 3-methyl-1,6-hexanediol, 2-methyl-1,7-heptanediol, 3-methyl-1,7-heptanediol, 4-methyl-1,7-heptanediol, 2-methyl-1,8-octanediol, 3-methyl-1,8-octanediol and 4-methyloctanediol;

ii) alicyclic dihydric alcohols having 6 to 20 carbon atoms

for example, 1,4-cyclohexanediol, 1,3-cyclohexanedimethanol, 1,4-cyclohexanediol, 1,3-cyclopentanediol, 1,4-cycloheptanediol, 2,5-bis(hydroxymethyl)-1,4-dioxane, 2,7-norbornanediol, tetrahydrofuran dimethanol, 1,4-bis(hydroxyethoxy)cyclohexane, 1,4-bis(hydroxymethyl)cyclohexane and 2,2-bis(4-hydroxycyclohexyl)propane;

iii) aromatic ring-containing dihydric alcohols having 8 to 20 carbon atoms

for example, *m*- or *p*-xylylene glycol, bis(hydroxyethyl)benzene and bis(hydroxyethoxy)benzene;

iv) trihydric alcohols having 3 to 20 carbon atoms

for example, aliphatic triols (glycerin and trimethylolpropane);

v) quadrihydric to octahydric alcohols having 5 to 20 carbon atoms

for example, aliphatic polyols (pentaerythritol, sorbitol, mannitol, sorbitan, diglycerin and dipentaerythritol); and

vi) saccharides

for example, sucrose, glucose, mannose, fructose, methylglucoside, and derivatives thereof.

Here, it is preferred to use two or more polyhydric alcohols.

From the standpoint of the texture of the resulting sheet-like article, it is preferred that the polycarbonate polyol contain a polycarbonate polyol having a melting point of 20°C or lower. Polycarbonate polyols having a melting point of 20°C or lower have a structure containing only a small amount of crystals at room temperature, and such a polycarbonate polyol (hereinafter, referred to as "amorphous polycarbonate polyol") is more likely to yield a flexible polyurethane resin as compared to polycarbonate polyols having a crystal structure. The content of the amorphous polycarbonate polyol is preferably 80 to 100% by mass, more preferably 90 to 100% by mass, with respect to the total amount of polycarbonate polyol.

Further, from another standpoint of the measure for improving the texture of the resulting sheet-like article, it is preferred that the polycarbonate polyol contain a polycarbonate polyol copolymerized with two or more polyhydric alcohols having different carbon skeletons. The polycarbonate polyol copolymerized with polyhydric alcohols having different carbon skeletons (hereinafter, referred to as "copolymerized polycarbonate polyol") is likely to yield a flexible polyurethane resin because it is likely to assume a structure with no regularity in the molecular alignment and its soft segment, which is mainly formed by polyol, is flexible. The content of the copolymerized polycarbonate polyol is preferably 80 to 100% by mass, more preferably 90 to 100% by mass, with respect to the total amount of polycarbonate polyol.

The amorphous polycarbonate polyol and the copolymerized polycarbonate polyol each have a viscosity at 40°C of preferably 10,000 to 50,000 mPa·s, more preferably 15,000 to 40,000 mPa·s.

The amorphous polycarbonate polyol and copolymerized polycarbonate polyol are preferably polycarbonate polyols in which a combination of two or more linear or branched aliphatic dihydric alcohols having 2 to 12 carbon atoms is used as the above-described polyhydric alcohols having 2 to 20 carbon atoms. As the amorphous polycarbonate polyol and copolymerized polycarbonate polyol, 1,4-butanediol, 1,5-pentanediol, 1,6-hexanediol, 3-methyl-1,5-pentanediol, 1,9-nonanediol and 2-methyl-1,8-octanediol are more preferred. A combination of two or more dihydric alcohols selected from the above-described polycarbonate polyols is still more preferably used, and a combination of 1,5-pentanediol and 1,6-hexanediol is particularly preferably used.

From the standpoints of the flexibility and impact resilience of the polyurethane resin, the melting point of the amorphous polycarbonate polyol is preferably -80 to 15°C.

Examples of commercially available amorphous polycarbonate polyols include "'DURANOL' (registered trademark; the same applies below) G4672" (a copolymer having a C4 linear carbon skeleton and a C5 linear carbon skeleton; manufactured by Asahi Kasei Chemicals Corporation), "'DURANOL' T5652" (a copolymer having a C5 linear carbon skeleton and a C6 linear carbon skeleton; manufactured by Asahi Kasei Chemicals Corporation), "'KURARAY POLYOL' (registered trademark; the same applies below) C-2090" (a copolymer having a C5 linear carbon skeleton containing a branched structure of a methyl group and a C6 linear carbon skeleton; manufactured by Kuraray Co., Ltd.), "'KURARAY POLYOL' C-2050" (a copolymer having a C8 linear carbon skeleton containing a branched structure of a methyl group and a C9 linear carbon skeleton; manufactured by Kuraray Co., Ltd.) and "'KURARAY POLYOL' C-2015N" (manufactured by Kuraray Co., Ltd.).

Meanwhile, examples of commercially available crystal-containing polycarbonate polyols include "'DURANOL' T6002" (manufactured by Asahi Kasei Chemicals Corporation), "'ETERNACOLL' (registered trademark) UH-200" (manufactured by Ube Industries, Ltd.), "'NIPPOLLAN' (registered trademark) 980R" (manufactured by Nippon Polyurethane Industry Co., Ltd.) and "'PLACCEL' (registered trademark) CD220" (manufactured by Daicel Chemical Industries, Ltd.). In these crystal-containing polycarbonate polyols, the carbon skeleton is formed by a C6 straight chain alone.

A polyester polyol can be used as a polyol other than polycarbonate polyol. The polyester polyol imparts the molecule of the polyurethane resin with an ester bond. Examples of the polyester include dehydration condensation-type polyester polyols and polylactone polyols.

Examples of the dehydration condensation-type polyester polyols include those polyester polyols that are obtained by condensation of any of the above-described polyhydric alcohols having 2 to 20 carbon atoms and a polycarboxylic acid having 2 to 10 carbon atoms or an ester-forming derivative thereof (e.g., an acid anhydride, a lower (C1 to C4) alkyl ester or an acid halide).

Examples of the polycarboxylic acid having 2 to 10 carbon atoms or ester-forming derivative thereof include the followings:

> i) aliphatic dicarboxylic acids
> for example, succinic acid, adipic acid, azelaic acid, sebacic acid, fumaric acid and maleic acid;
> ii) alicyclic dicarboxylic acids
> for example, dimer acid;
> iii) aromatic dicarboxylic acids
> for example, terephthalic acid, isophthalic acid and fumaric acid;
> iv) tricarboxylic and higher polycarboxylic acids
> for example, trimellitic acid and pyromellitic acid;
> v) anhydrides of the above-described acids
> for example, succinic anhydride, maleic anhydride, phthalic anhydride and trimellitic anhydride;
> vi) halides of the above-described acids
> for example, adipic acid dichloride; and
> vii) low-molecular-weight alkyl esters of the above-described acids
> for example, dimethyl succinate and dimethyl phthalate.

Further, these compounds may be used in combination. Thereamong, aliphatic dicarboxylic acids and ester-forming derivatives thereof are particularly preferred.

In the condensation-type polyester polyols, the above-described polyhydric alcohols having 2 to 20 carbon atoms and polycarboxylic acids having 2 to 10 carbon atoms or ester-forming derivatives thereof may each be used individually, or two or more thereof may be used in combination.

Examples of the polylactone polyols include those that are obtained by ring-opening polymerization of lactone monomers (e.g., γ-butyrolactone, γ-valerolactone, ε-caprolactone, or a mixture of two or more of these monomers) using any of the above-described polyhydric alcohol having 2 to 20 carbon atoms as an initiator.

A polyether polyol can also be used as a polyol other than polycarbonate polyol. The polyether polyol imparts the molecule of the polyurethane resin with an ether bond. Examples of the polyether polyol include those that are obtained by addition-polymerization of alkylene oxide (hereinafter, may be abbreviated as "AO") using any of the above-described polyhydric alcohol having 2 to 20 carbon atoms as an initiator.

The AO added to the polyhydric alcohol having 2 to 20 carbon atoms used as an initiator is, for example, an AO having 2 to 12 carbon atoms. Examples of such an AO include ethylene oxide (hereinafter, may be abbreviated as "EO"), 1,2- or 1,3-propylene oxide, 1,2-, 1,3- or 2,3-butylene oxide, tetrahydrofuran (hereinafter, may be abbreviated as "THF"), 3-methyltetrahydrofuran, styrene oxide, α-olefin oxide and epichlorohydrin.

These AOs may be used individually, or two or more thereof may be used in combination. When two or more AOs are used in combination, their polymer structure may be a random structure or a block structure, or a combination thereof.

Among such polyether polyols, from the standpoints of the weather resistance and mechanical strength of the polyurethane resin, those having a copolymer structure, particularly polyoxytetramethylene glycol as well as compounds having a hydroxyl group at both ends, which are copolymers of THF and 3-methyltetrahydrofuran, are preferred.

Among polyester polyols and polyether polyols that can be used in combination with polycarbonate polyol in polyols, from the standpoints of the flexibility and resilience of the polyurethane resin, polyether polyols are preferred and polyether diols are more preferred.

As a raw material of the polyurethane resin used in the present invention, a compound other than the above-described polymer polyol, which compound has an active hydrogen that reacts with isocyanate, can also be used. For example, a compound having a hydrophilic group and an active hydrogen, a chain extender and a reaction terminator can be used. The reason why a compound having a hydrophilic group and an active hydrogen is used as a preferred raw material is because, when it is desired to disperse the polyurethane resin in an aqueous medium, the hydrophilic group contributes to the dispersibility. Examples of the compound having a hydrophilic group and an active hydrogen include compounds containing an anionic group and an active hydrogen and compounds containing a cationic group and an active hydrogen.

Examples of the compounds containing an anionic group and an active hydrogen include the followings:

i) compounds having 2 to 10 carbon atoms that contain a carboxyl group as an anionic group
for example, dialkylol alkanoic acids (specifically, 2,2-dimethylol propionic acid, 2,2-dimethylol butanoic acid, 2,2-dimethylol heptanoic acid and 2,2-dimethyloloctanoic acid), tartaric acid and amino acids (specifically, glycine, alanine and valine);
ii) compounds having 2 to 16 carbon atoms that contain a sulfo group as an anionic group
for example, 3-(2,3-dihydroxypropoxy)-1-propanesulfonic acid and sulfoisophthalic acid di(ethylene glycol) ester;
iii) compounds having 2 to 10 carbon atoms that contain a sulfamate group as an anionic group
for example, *N,N*-bis(2-hydroxyethyl)sulfamic acid; and

salts obtained by neutralizing these compounds with a neutralizer.

Examples of the compounds containing a cationic group and an active hydrogen include the followings:

i) tertiary amino group-containing diols having 1 to 20 carbon atoms
for example, *N*-alkyldialkanolamines (e.g., *N*-methyldiethanolamine, *N*-propyldiethanolamine, *N*-butyldiethanolamine and *N*-methyldipropanolamine) and *N,N*-dialkylmonoalkanolamines (e.g., *N,N*-dimethylethanolamine); and salts obtained by neutralizing these compounds with a neutralizer.

In the synthesis of the polyurethane resin, a chain extender is added as required. Examples of the chain extender include the followings:

i) water;
ii) polyhydric alcohols having 2 to 20 carbon atoms;
iii) aliphatic polyamines having 2 to 36 carbon atoms
for example, alkylenediamines such as ethylenediamine and hexamethylenediamine, and polyalkylene (polymerization degree = 2 to 6, C2 to C6) polyamines (n = 3 to 7) such as diethylenetriamine, dipropylenetriamine, dihexylenetriamine, triethylenetetramine, tetraethylenepentamine, pentaethylenehexamine and hexaethyleneheptamine;
iv) alicyclic polyamines having 6 to 20 carbon atoms
for example, 1,3- or 1,4-diaminocyclohexane, 4,4'- or 2,4'-dicyclohexylmethanediamine and isophoronediamine;
v) aromatic polyamines having 6 to 20 carbon atoms
for example, 1,3- or 1,4-phenylenediamine, 2,4- or 2,6-tolylenediamine, and 4,4'- or 2,4'-methylenebisaniline;
vi) heterocyclic polyamines having 3 to 20 carbon atoms
for example, 2,4-diamino-1,3,5-triazine, piperazine and *N*-aminoethyl piperazine;
vii) hydrazine and derivatives thereof
for example, dibasic acid dihydrazides (e.g., adipic acid dihydrazide); and viii) amino alcohols having 2 to 20 carbon atoms
for example, ethanolamine, diethanolamine, 2-amino-2-methylpropanol and triethanolamine.

From the standpoint of the mechanical strength of the polyurethane resin, examples of preferred chain extenders include water, polyhydric alcohols having 2 to 20 carbon atoms, aliphatic polyamines having 2 to 36 carbon atoms, alicyclic polyamines having 6 to 20 carbon atoms and aromatic polyamines having 6 to 20 carbon atoms.

In the synthesis of the polyurethane resin, a reaction terminator can be used as required. Examples of the reaction terminator include the followings:

i) monohydric alcohols having 1 to 20 carbon atoms
for example, methanol, ethanol, butanol, octanol, decanol, dodecyl alcohol, myristyl alcohol, cetyl alcohol and stearyl alcohol;

ii) monoalkylamines having 1 to 20 carbon atoms

for example, monomethylamine, monoethylamine, monobutylamine, dibutylamine, monooctylamine and monoethanolamine;

iii) dialkylamines having 2 to 20 carbon atoms

for example, diethylamine and dibutylamine; and

iv) monoalkanolamines and dialkanolamines

for example, diethanolamine and diisopropanolamine.

As the organic polyisocyanate component used in the synthesis of the polyurethane resin used in the present invention, one which can be used for the production of a polyurethane and has two or more isocyanate groups can be employed. Examples thereof include aromatic polyisocyanates having 8 to 26 carbon atoms, aliphatic polyisocyanates having 4 to 22 carbon atoms, alicyclic polyisocyanates having 8 to 18 carbon atoms, aromatic-aliphatic polyisocyanates having 10 to 18 carbon atoms, and modified products of these polyisocyanates. These organic polyisocyanate components may be used individually, or two or more thereof may be used in combination.

Examples of the aromatic polyisocyanates having 8 to 26 carbon atoms include the followings: 1,3- or 1,4-phenylene diisocyanate, 2,4- or 2,6-tolylene diisocyanate (hereinafter, tolylene diisocyanate may be abbreviated as "TDI"), crude TDI, 4,4'- or 2,4'-diphenylmethane diisocyanate (hereinafter, diphenylmethane diisocyanate may be abbreviated as "MDI"), crude MDI, polyaryl polyisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, and *m*- or *p*-isocyanatophenylsulfonylisocyanate.

Examples of the aliphatic polyisocyanates having 4 to 22 carbon atoms include the followings: ethylene diisocyanate, tetramethylene diisocyanate, hexamethylene diisocyanate (hereinafter, may be abbreviated as "HDI"), dodecamethylene diisocyanate, 1,6,11-undecane triisocyanate, 2,2,4-trimethylhexamethylene diisocyanate, lysine diisocyanate, 2,6-diisocyanatomethylcaproate, bis(2-isocyanatoethyl)fumarate, bis(2-isocyanatoethyl)carbonate and 2-isocyanatoethyl-2,6-diisocyanatohexanoate.

Examples of the alicyclic polyisocyanates having 8 to 18 carbon atoms include the followings: isophorone diisocyanate (hereinafter, may be abbreviated as "IPDI"), 4,4-dicyclohexylmethane diisocyanate (hereinafter, may be abbreviated as "hydrogenated MDI"), cyclohexylene diisocyanate, methylcyclohexylene diisocyanate, bis(2-isocyanatoethyl)-4-cyclohexene-1,2-dicarboxylate, and 2,5- or 2,6-norbornane diisocyanate.

Examples of the aromatic-aliphatic polyisocyanates having 10 to 18 carbon atoms include *m*- or *p*-xylylene diisocyanate and $\alpha,\alpha,\alpha',\alpha'$-tetramethylxylylene diisocyanate.

Examples of modified products of polyisocyanates include modified products of the above-described polyisocyanate compounds, such as modified MDIs (e.g., urethane-modified MDI, carbodiimide-modified MDI and trihydrocarbyl phosphate-modified MDI), urethane-modified TDI, biuret-modified HDI, isocyanurate-modified HDI and isocyanurate-modified IPDI.

Among these organic polyisocyanate components, from the standpoint of the mechanical physical properties of the resulting sheet-like article, aromatic polyisocyanates, aliphatic polyisocyanates and alicyclic polyisocyanates are preferred. Aromatic polyisocyanates and alicyclic polyisocyanates are more preferred, and MDI, IPDI and hydrogenated MDI are particularly preferred.

In the polyurethane resin of the present invention, one or more functional groups selected from a hydroxyl group, a carboxyl group, a sulfo group and primary and secondary amino groups may be introduced as well. An addition of a cross-linking agent reactive with these functional groups causes further reaction, which leads to an increase in the molecular weight or cross-linking density of the polyurethane resin. Consequently, the durability, weather resistance, heat resistance and wet strength retention can be further improved.

As a method of introducing a hydroxyl group to the polyurethane resin, for example, a method where, in the synthesis of a polyurethane resin, a compound having a hydroxyl group as active hydrogen is used to allow the number of hydroxyl groups as active hydrogens to be greater than the number of isocyanate groups, can be employed. The compound having a hydroxyl group as active hydrogen is as described above.

As a method of introducing a carboxyl group or a sulfo group to the polyurethane resin, for example, a method of using an active hydrogen-containing compound which has a carboxyl group or a sulfo group as the above-described anionic group as a part can be employed. In this case, the active hydrogen-containing compound is preferably a compound having 2 to 10 carbon atoms.

As a method of introducing a primary or secondary amino group to the polyurethane resin, for example, a method in which a urethane prepolymer containing residual isocyanate group is obtained by reaction and the isocyanate group of this urethane prepolymer is subsequently allowed to react with a polyamine can be employed. Examples of the polyamine include aliphatic polyamines having 2 to 36 carbon atoms, alicyclic polyamines having 6 to 20 carbon atoms, aromatic polyamines having 6 to 20 carbon atoms and heterocyclic polyamines having 3 to 20 carbon atoms.

As the cross-linking agent, one which has, in its molecule, two or more reactive groups capable of reacting with reactive group(s) introduced to polyurethane can be used. Examples of such a cross-linking agent include water-soluble isocyanate compounds, blocked isocyanate compounds, melamine compounds, oxazoline compounds, carbodiimide compounds, aziridine compounds, epoxy compounds and hydrazine compounds. These cross-linking agents may be used individually, or two or more thereof may be used in combination.

The isocyanate compounds are compounds having two or more isocyanate groups in the molecule, and examples thereof include the same isocyanate compounds as those exemplified above for the organic polyisocyanate component.

The blocked isocyanate compounds are compounds having two or more blocked isocyanate groups, which are obtained by, for example, blocking the isocyanate groups of the above-described isocyanate compounds with a blocking agent. Examples of the blocking agent include the followings: phenol compounds, secondary and tertiary alcohols, oxime compounds, aliphatic or aromatic secondary amine compounds, phthalimide compounds, lactam compounds, active methylene-containing compounds (e.g., dialkyl malonates), pyrazole compounds (e.g., pyrazole and 3,5-dimethylpyrazole), and sodium hydrogen sulfite.

Examples of commercially available blocked isocyanates include "DURANATE" (registered trademark; the same applies below) Series manufactured by Asahi Kasei Chemicals Corporation (e.g., "DURANATE" 22A-75P, 24A-100, 21S-75E, TPA-100, TKA-100, MFA-75B, MHG-80B, TLA-100, TSA-100, TSS-100, TSE-100, P301-75E, E402-80B, E405-70B, AE700-100, D101, D201, MF-K60X and A201H); and "TAKENATE" (registered trademark; the same applies below) Series manufactured by Mitsui Chemicals, Inc. (e.g., "TAKENATE" D-103N, D-160N, D-140N, D-110N, D-181N, D-120N, D-165N90CX, D-204, D-170N, PW Series and B Series.

Examples of the melamine compounds include methylolated melamine compounds and methoxymethylolated melamine compounds that have two or more methylol groups or methoxymethylol groups in the molecule, such as "U-VAN" (registered trademark; the same applies below) Series manufactured by Mitsui Chemicals, Inc. (e.g., "U-VAN" 120, 20HS, 2021, 2028, 228, 2860 and 22R), "CYMEL" (registered trademark; the same applies below) Series manufactured by CYTEC Japan, Ltd. (e.g., "CYMEL" 202, 232, 235, 238, 254, 266, 267, 272, 285, 301, 303, 325, 327, 350, 370, 701, 703, 736, 738, 771, 114, 1156 and 1158) and "SUMIMAL" (registered trademark; the same applies below) Series manufactured by Sumitomo Chemical Co., Ltd. (e.g., "SUMIMAL" M-30W, M-50W, M-55, M-66B and 50B).

Examples of the oxazoline compounds include compounds having two or more oxazoline groups (oxazoline skeletons) in the molecule, for example, compounds having two or more oxazoline groups, such as 2,2'-isopropylidene-bis(4-phenyl-2-oxazoline); (co)polymers of polymerizable oxazoline compounds, such as 2-isopropenyl-2-oxazoline, 2-vinyl-2-oxazoline and 2-vinyl-4-methyl-2-oxazoline; and copolymers of any of the above-described polymerizable oxazoline compounds and a copolymerizable monomer(s) that do not react with an oxazoline group (e.g., (meth)acrylates such as methyl (meth)acrylate, ethyl (meth)acrylate, hydroxyethyl (meth)acrylate and polyethylene glycol (meth)acrylate, (meth)acrylic acid amide, vinyl acetate, styrene, α-methylstyrene, and sodium styrene sulfonate). Examples of commercially available oxazoline compounds include "EPOCROS" (registered trademark; the same applies below) K-2010E, "EPOCROS" K-2020E and "EPOCROS" WS-500, which are manufactured by Nippon Shokubai Co., Ltd.

Examples of the carbodiimide compounds include compounds having two or more carbodiimide groups in the molecule. For example, aliphatic polycarbodiimide (e.g., poly(hexamethylene carbodiimide)), alicyclic polycarbodiimide (e.g., poly(4,4'-dicyclohexylmethane carbodiimide)) and aromatic polycarbodiimide (e.g., poly(p-phenylene carbodiimide), which are obtained by polymerizing any of the above-described aromatic polyisocyanates having 8 to 26 carbon atoms, aliphatic polyisocyanates having 4 to 22 carbon atoms, alicyclic polyisocyanates having 8 to 18 carbon atoms or aromatic-aliphatic polyisocyanates having 10 to 18 carbon atoms; poly(4,4'-diphenylmethane carbodiimide); and poly(diisopropylphenylcarbodiimide)) can be used. Examples of commercially available carbodiimide compounds include "CARBODILITE" (registered trademark; the same applies below) V-01, "CARBODILITE" V02, "CARBODILITE" V-03, "CARBODILITE" V-04, "CARBODILITE" V-05, "CARBODILITE" V-07, "CARBODILITE" V-09, "CARBODILITE" E-02, "CARBODILITE" E-03A and "CARBODILITE" E-04, which are manufactured by Nisshinbo Holdings Inc.

Examples of the aziridine compounds include compounds having two or more aziridinyl groups in the molecule, such as tetramethylolmethane tris(β-aziridinylpropionate) and trimethylolpropane tris(β-aziridinylpropionate).

Examples of the epoxy compounds include compounds having two or more epoxy groups in the molecule, such as phenylglycidyl ether, resorcinol diglycidyl ether, neopentyl glycol diglycidyl ether, 1,6-hexanediol diglycidyl ether, glycerol polyglycidyl ether, hydrogenated bisphenol A diglycidyl ether, trimethylolpropane polyglycidyl ether, pentaerythritol polyglycidyl ether and polypropylene glycol diglycidyl ether.

Examples of the hydrazine compounds include hydrazine and compounds having two or more hydrazine groups (hydrazine skeletons) in the molecule, such as dicarboxylic acid dihydrazides having 2 to 10 carbon atoms (e.g., oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide and itaconic acid dihydrazide) and alkylene dihydrazines having 2 to 10 carbon atoms (e.g., ethylene dihydrazine, 1,3-propylene dihydrazine, 1,4-butylene dihydrazine and 1,6-hexylene dihydrazine).

By adding a compound having a sulfo group, a carboxyl group, a hydroxyl group or a primary or secondary amino group at the time of polyurethane synthesis, any of the above-described compounds that appropriately react therewith can be used as a cross-linking agent.

Particularly, from the standpoint of the cross-linking reaction rate, a carboxyl group is preferred as the functional group of the polyurethane resin, and oxazoline compounds and carbodiimide compound are preferred as the cross-linking agent.

The cross-linking agent is used in such an amount that makes the number of the reactive groups thereof to be preferably 0.05 to 2.0 times, more preferably 0.1 to 1.0 times, as that of the above-described reactive groups in the polyurethane resin such as sulfo groups, carboxyl groups, hydroxyl groups, or primary or secondary amino groups. When the cross-linking agent is used in an amount that makes the number of the reactive groups thereof to be 0.05 times or less as that of the reactive groups in the polyurethane resin, the progress of the cross-linking reaction is poor, whereas when the cross-linking agent is used in an amount that makes the number of the reactive groups thereof to be 2.0 times or more as that of the reactive groups in the polyurethane resin, the cross-linking agent mostly does not react, which leads to an increase in the production cost.

From the standpoints of the mechanical strength, weather resistance and flexibility of the resulting sheet-like article, the molecular weight of the cross-linking agent is preferably 100 to 800 per reactive group.

In a polyurethane resin composition obtained by dissolving or dispersing the polyurethane resin in the above-described solvent, the following various additives can be incorporated:

(i) pigments
for example, carbon black;
(ii) antioxidants
for example, hindered phenol-based, sulfur-based and phosphorus-based antioxidants;
(iii) ultraviolet absorbers
for example, benzotriazole-based, triazine-based, benzophenone-based and benzoate-based ultraviolet absorbers;
(iv) weathering stabilizers for example, hindered amine-based weathering stabilizers;
(v) soft water repellents
for example, silicone compounds such as polysiloxanes and modified silicone oils, and fluorine compounds such as fluoroalkyl ester-based polymers of acrylic acid;
(vi) wetting agents
for example, ethylene glycol, diethylene glycol, propylene glycol and glycerin;
(vii) antifoaming agents
for example, octyl alcohols, sorbitan monooleate, polydimethylsiloxane, polyether-modified silicone and fluorine-modified silicone;
(viii) fillers
for example, fine particles and hollow beads of calcium carbonate, titanium oxide, silica, talc, ceramics, resins and the like;
(ix) flame retardants
for example, halogen-based, phosphorus-based, antimony-based, melamine-based, guanidine-based, guanylurea-based, silicone-based and inorganic flame retardants;
(x) foaming agents
for example, organic foaming agents such as dinitrosopentamethylene tetramine (e.g., "CELLMIC (registered trademark; the same applies below) A", manufactured by Sankyo Kasei Co., Ltd.), azodicarbonamide (e.g., "CELLMIC CAP", manufactured by Sankyo Kasei Co., Ltd.), $p,p$'-oxybisbenzene sulfonylhydrazide (e.g., "CELLMIC S", manufactured by Sankyo Kasei Co., Ltd.) and $N,N$'-dinitrosopentamethylene tetramine (e.g., "CELLULAR GX", manufactured by Eiwa Chemical Ind. Co., Ltd.), and
inorganic foaming agents such as sodium hydrogen carbonate (e.g., "CELLMIC (registered trademark) 266", manufactured by Eiwa Chemical Ind. Co., Ltd.);
(xi) viscosity modifiers and plasticizers
for example, phthalates and adipates; and
(xii) mold release agents
for example, wax-based and metallic soap-based mold release agents, and mixtures thereof.

In the present invention, in order to obtain a sheet-like article which has soft texture with excellent crease recovery and exhibits excellent durability and light resistance, it is preferred to use an amorphous polycarbonate polyol in combination with a polyester polyol and/or a polyether polyol. A preferred embodiment is as follows.

From the standpoints of the mechanical strength, flexibility and crease recovery, in the polyurethane resin, the total value of the urethane group concentration and urea group concentration is preferably 7 to 11% by mass, more preferably 7.5 to 10% by mass. Further, from the standpoints of the mechanical strength and flexibility of the polyurethane resin, the urea group concentration is preferably 1 to 4% by mass, more preferably 1.5 to 3% by mass. The urethane group and urea group form an isocyanate-derived rigid structure in the polyurethane resin. Thus, the higher the concentration of these groups, the superior becomes the mechanical strength but the harder becomes the polyurethane resin. By controlling the total value of the urethane group concentration and urea group concentration in the above-described range, a sheet-like article having softer texture and exhibits superior wrinkle recovery can be obtained. As a more preferred embodiment, from the standpoints of the flexibility and impact resilience, a polyurethane resin film in the present invention has a storage elastic modulus (E') at 20°C of preferably 1 to 70 MPa, more preferably 5 to 40 MPa, and a tan $\delta$ value of preferably 0.05 to 0.3, more preferably 0.06 to 0.2.

The E' indicates the elasticity of the polyurethane resin and, when the E' is excessively small, the resulting sheet-like article shows poor crease recovery, whereas when the E' is excessively large, the sheet-like article has hard texture.

Meanwhile, the tan $\delta$ represented by E"/E' (wherein E" is the loss elastic modulus and indicates viscosity) means the ratio of the viscosity determined based on the elasticity of the polyurethane resin. As in the case of the E', when the tan $\delta$ is excessively small, the resulting sheet-like article shows poor crease recovery, whereas when the tan $\delta$ is larger than 0.3, the sheet-like article has hard texture.

In the present invention, the storage elastic modulus (E') and tan $\delta$ are values measured for a 200-$\mu$m thick film of the subject polyurethane resin at a frequency of 11 Hz using a storage elastic modulus analyzer (RHEOGEL E4000, manufactured by UBM).

When the polyurethane resin in the present invention has no cross-linked structure and the number-average molecular weight thereof is measurable, from the standpoints of the mechanical strength and weather resistance, the number-average molecular weight of the polyurethane resin is preferably 10,000 to 1,000,000, more preferably 10,000 to 500,000, particularly preferably 10,000 to 200,000, most preferably 10,000 to 100,000.

The number-average molecular weight of the polyurethane resin can be measured by, for example, gel permeation chromatography using "HLC-8220GPC" manufactured by Tosoh Corporation, in which *N,N*-dimethylformamide (hereinafter, may be abbreviated as "DMF") is used as a solvent, polystyrene is used as a standard substance, GUARD COLUMN $\alpha$ and "TSKgel" (registered trademark) $\alpha$-M (both of which are manufactured by Tosoh Corporation) are used as a column and stationary phase and the measurement is performed at a sample concentration of 0.125% by mass and a column temperature of 40°C.

The sheet-like article of the present invention has a density of preferably 0.2 to 0.7 g/cm$^3$, more preferably not less than 0.3 g/cm$^3$ and 0.6 g/cm$^3$ or less. When the density is in this range, the sheet-like article has a fine surface and high-quality outer appearance with appropriate texture.

The ratio of the polyurethane resin in the sheet-like article of the present invention is not less than 10% by mass, preferably not less than 15% by mass, and 80% by mass or less, preferably 70% or less. By controlling the ratio of the polyurethane resin to be not less than the above-described smaller value, strength can be imparted to the sheet and shedding of fibers can be inhibited. Further, by controlling the ratio to be not higher than the above-described larger value, hardening of the texture can be inhibited and good nap quality can be attained.

[Method of Producing Polyurethane Resin]

A method of producing the polyurethane resin used in the present invention will now be described. As a method of producing an organic solvent-soluble polyurethane resin, for example, a method of allowing an active hydrogen-containing compound to react with an organic polyisocyanate component in the below-described organic solvent can be employed.

The active hydrogen-containing compound is required to contain a polyol as described above and may further contain one of more hydrophilic group-containing compounds, chain extenders and/or reaction terminators.

Examples of the organic solvent used as a solvent include ketone-based solvents (e.g., acetone, methyl ethyl ketone and methyl isobutyl ketone), ester-based solvents (e.g., ethyl acetate, butyl acetate and $\gamma$-butyrolactone), ether-based solvents (e.g., THF, dioxane and diethyl ether), amide-based solvents (e.g., DMF, *N,N*-dimethylacetamide, *N*-methyl-2-pyrrolidone and *N*-methylcaprolactam), alcohol-based solvents (e.g., methanol, ethanol and isopropyl alcohol) and aromatic hydrocarbon-based solvents (e.g., toluene and xylene). These organic solvents may be used individually, or two or more thereof may be used in combination. Thereamong, from the standpoint of the solubility of the polyurethane resin, an amide-based solvent is preferred as the organic solvent.

As a method of producing a polyurethane resin solution, a conventional production method can be employed. Examples thereof include the followings:

i) a method in which the active hydrogen-containing compound, organic polyisocyanate component and organic solvent are loaded altogether to a reaction vessel and allowed to react;

ii) a method in which the active hydrogen-containing compound and organic polyisocyanate component are loaded separately to a reaction vessel in the presence of the organic solvent and allowed to react in a multistep manner; and iii) a method in which a composition obtained in advance by mixing the active hydrogen-containing compound, organic polyisocyanate component and organic solvent is passed through a heated multi-axial extruder and thereby allowed to react.

The polyurethanization reaction temperature is usually 30 to 180°C, preferably 60 to 120°C. Further, in order to accelerate the polyurethanization reaction, a catalyst used in urethanization reaction may be used as required. Examples of the catalyst include the followings:

i) amine catalysts
for example, triethylamine, *N*-ethylmorpholine, triethylene diamine and the cycloamidines described in U.S. Patent No. 4524104 (e.g., 1,8-diaza-bicyclo[5,4,0]-7-undecene (as a commercial product, "DBU" manufactured by San-Apro Ltd.);
ii) tin-based catalysts
for example, dibutyl tin dilaurate, dioctyl tin dilaurate, and tin octylate;
iii) titanium-based catalysts
for example, tetrabutyl titanate; and
iv) bismuth-based catalysts
for example, bismuth trioctylate.

Examples of a method of producing an aqueous dispersion of the polyurethane resin include the below-described methods [i] and [ii]. Examples of an aqueous medium include a mixture of water and an organic solvent that can be applied as a solvent of an organic solvent-based polyurethane. From the standpoint of dispersibility, the organic solvent used in the aqueous medium is preferably a water-soluble organic solvent.

[i] Among active hydrogen-containing compounds, a polymer polyol, a hydrophilic group-containing compound and an organic polyisocyanate component as well as, as required, a chain extender and/or a reaction terminator are allowed to react in a single step or multiple steps in the presence or absence of an organic solvent, thereby forming a polyurethane resin. This polyurethane resin is subsequently dispersed in an aqueous medium. Upon the dispersion into the aqueous medium, a salt of the hydrophilic group may be formed with an addition of a compound that neutralizes the hydrophilic group of the polyurethane resin. Further, the aqueous medium may contain an organic solvent and/or a surfactant.
[ii] First, a polymer polyol, a hydrophilic group-containing compound and an organic polyisocyanate component as well as, as required, a chain extender and/or a reaction terminator are added and mixed in a single step or multiple steps to form a urethane prepolymer. This may be performed in the presence of an organic solvent. Then, the prepolymer is dispersed in an aqueous medium and allowed to react until all isocyanate groups disappear. In this process, a compound that neutralizes the hydrophilic group to form a salt may be added as well. Further, at least one organic solvent, surfactant, chain extender and/or reaction terminator may also be added. The disappearance of the isocyanate groups occurs due to reaction with water, chain extender or reaction terminator.

In the above-described methods of [i] and [ii], in order to accelerate the urethanization reaction, the above-described catalysts can be used.
From the standpoints of the dispersion stability and transport cost, the urethane resin concentration in the aqueous dispersion is preferably 15 to 70% by mass, more preferably 20 to 60% by mass.
In the aqueous dispersion of the polyurethane resin, from the standpoints of the storage stability and viscosity, the polyurethane resin has a volume-average particle size of preferably 0.01 to 1 $\mu$m, more preferably 0.02 to 0.7 $\mu$m, particularly preferably 0.03 to 0.5 $\mu$m.
When the polyurethane resin is dispersed in an aqueous medium, from the standpoint of the dispersion stability of the polyurethane resin, it is preferred to use a compound having a hydrophilic group and an active hydrogen as a raw material of the polyurethane resin, and it is more preferred that the polyurethane resin is neutralized before being dispersed.
Examples of a neutralizer used for neutralization of the compound having a hydrophilic group and an active hydrogen include ammonia, amine compounds having 1 to 20 carbon atoms, and hydroxides of alkali metals (e.g., sodium, potassium and lithium).
Examples of the amine compounds having 1 to 20 carbon atoms include primary amines, such as monomethylamine, monoethylamine, monobutylamine, monoethanolamine and 2-amino-2-methyl-1-propanol; secondary amines, such as dimethylamine, diethylamine, dibutylamine, diethanolamine and N-methyldiethanolamine; and tertiary amines, such as trimethylamine, triethylamine, dimethylethylamine and triethanolamine.

Thereamong, from the standpoints of the odor and water resistance of the resulting polyurethane resin composition, as the neutralizer, amine compounds having a low vapor pressure are preferred, and triethylamine, monoethanolamine, diethanolamine and *N*-methyldiethanolamine are more preferred.

In addition to the above-described substances, examples of the neutralizer also include monocarboxylic acids having 1 to 10 carbon atoms (e.g., formic acid, acetic acid, propanoic acid and lactic acid), carbonic acid, hydrochloric acid, phosphoric acid, sulfuric acid, dimethyl carbonate, dimethyl sulfate, methyl chloride and benzyl chloride. Thereamong, as the neutralizer, from the standpoints of the odor and the like of the polyurethane resin, carbonic acid and phosphoric acid are preferred.

Among compounds having a hydrophilic group and an active hydrogen that may be used as a raw material for obtaining an aqueous dispersion of polyurethane resin, from the standpoints of the mechanical strength and dispersion stability of the polyurethane resin, 2,2-dimethylol propionic acid, 2,2-dimethylol butanoic acid and neutral salts thereof are preferred, and salts of 2,2-dimethylol propionic acid or 2,2-dimethylol butanoic acid neutralized with an amine compound are more preferred.

The neutralizer for the hydrophilic group may be added at any time before, during or after the urethanization reaction, or before, during or after the step of dispersion into an aqueous medium. From the standpoints of the stability of the polyurethane resin and the stability of the resulting aqueous dispersion, it is preferred that the neutralizer be added before or during the step of dispersion into an aqueous medium.

In cases where a compound having a hydrophilic group and an active hydrogen is used, from the standpoints of the dispersion stability and water resistance of the resulting polyurethane resin, the total content of carboxyl group and/or its salt as well as sulfonate group and/or its salt is preferably 0.01 to 10% by mass, more preferably 0.02 to 5% by mass, with respect to the amount of the polyurethane resin.

In cases where the polyurethane resin is dispersed in an aqueous medium as particles, any of the above-described compounds having a hydrophilic group and an active hydrogen may be used, and the polyurethane resin can be dispersed in an aqueous medium with an addition of a surfactant.

Examples of the surfactant include nonionic surfactants, anionic surfactants, cationic surfactants, amphoteric surfactants, and other emulsifying dispersants. These surfactants may be used individually, or two or more thereof may be used in combination.

Examples of the nonionic surfactants include AO adduct-type nonionic surfactants and polyhydric alcohol-type nonionic surfactants. Examples of the AO adduct-type nonionic surfactants include EO adducts of aliphatic alcohols having 10 to 20 carbon atoms, EO adducts of phenols, EO adducts of nonyl phenols, EO adducts of alkylamines having 8 to 22 carbon atoms, and EO adducts of polypropylene glycols. Further, examples of the polyhydric alcohol-type nonionic surfactants include fatty acid esters of polyhydric alcohols (wherein, the alcohols preferably have a valence of 3 to 8 and 2 to 30 carbon atoms and the fatty acid preferably has 8 to 24 carbon atoms), such as glycerin monostearate, glycerin monooleate, sorbitan monolaurate and sorbitan monooleate; and alkyl polyglycosides (wherein, the alkyl has 4 to 24 carbon atoms and the polymerization degree is 1 to 10).

Examples of the anionic surfactants include the followings:

i) ether carboxylic acids and salts thereof (wherein, the ether bond-forming hydrocarbon groups preferably have 8 to 24 carbon atoms)
for example, lauryl ether sodium acetate and (poly)oxyethylene (number of added moles = 1 to 100) lauryl ether sodium acetate;
ii) sulfates and ether sulfates (wherein, the number of carbon atoms is preferably have 8 to 24), and salts thereof
for example, sodium lauryl sulfate, sodium (poly)oxyethylene (number of added moles =1 to 100) lauryl sulfate, triethanolamine (poly)oxyethylene (number of added moles = 1 to 100) lauryl sulfate and sodium (poly)oxyethylene (number of added moles = 1 to 100) coconut oil fatty acid monoethanol amide sulfate;
iii) hydrocarbon group-containing sulfonates (wherein, the number of carbon atoms is preferably have 8 to 24)
for example, sodium dodecylbenzenesulfonate;
iv) sulfosuccinates having one or two hydrocarbon groups (wherein, the hydrocarbon group(s) preferably have 8 to 24 carbon atoms);
v) hydrocarbon group-containing phosphates and ether phosphates, and salts thereof (wherein, the hydrocarbon group preferably has 8 to 24 carbon atoms)
for example, phosphates and ether phosphates that contain a hydrocarbon group(s) having 8 to 24 carbon atoms, and salts thereof, such as sodium lauryl phosphate and sodium (poly)oxyethylene (number of added moles =1 to 100) lauryl ether phosphate;
(vi) hydrocarbon group-containing fatty acid salts (wherein, the hydrocarbon group preferably has 8 to 24 carbon atoms)
for example, sodium laurate and triethanolamine laurate; and
(vii) hydrocarbon group-containing acylated amino acid salts (wherein, the hydrocarbon group preferably has 8 to 24 carbon atoms)
for example, sodium coconut oil fatty acid methyl taurine, sodium coconut oil fatty acid sarcosine, triethanolamine coconut oil fatty acid sarcosine, triethanolamine *N*-coconut oil fatty acid acyl-*L*-glutamate, sodium *N*-coconut oil fatty acid acyl-*L*-glutamate and sodium lauroylmethyl-$\beta$-alanine.

Examples of the cationic surfactants include the followings:

(i) quaternary ammonium salts
for example, stearyltrimethylammonium chloride, behenyltrimethylammonium chloride, distearyldimethylammonium chloride and ethyl sulfate lanolin fatty acid aminopropylethyldimethylammonium; and (ii) amine salts
for example, stearic acid diethylaminoethylamide lactate, dilaurylamine hydrochloride and oleylamine lactate.

Examples of the amphoteric surfactants include the followings:

i) betaine-type amphoteric surfactants
for example, coconut oil fatty acid amide propyldimethylamino acetic acid betaine, lauryl dimethylamino acetic acid betaine, 2-alkyl-*N*-carboxymethyl-*N*-hydroxyethyl imidazolinium betaine, lauryl hydroxy sulfobetaine, and sodium lauroylamide ethylhydroxyethylcarboxymethylbetaine hydroxypropyl phosphate; and ii) amino acid-type amphoteric surfactants
for example, sodium $\beta$-lauryl aminopropionate.

Examples of other emulsifying dispersants include the followings:

polyvinyl alcohols;
sugar derivatives, for example, starch and its derivatives, and cellulose derivatives such as carboxymethylcellulose, methylcellulose and hydroxyethylcellulose;
carboxyl group-containing (co)polymers such as sodium polyacrylate; and
those dispersing agents having an urethane group(s) or an ester group(s) that are described in U.S. Patent No. 5906704.

For example, a product obtained by coupling a polycaprolactone polyol and a polyether diol with a polyisocyanate can be used.

The surfactant may be added at any time before, during or after the urethanization reaction of the polyurethane resin, or before, during or after the step of dispersing the polyurethane resin in water and, from the standpoints of the dispersibility of the polyurethane resin and the stability of the resulting aqueous dispersion, it is preferred that the surfactant be added before or during the step of dispersing the polyurethane resin in water.

From the standpoint of the water resistance of the resulting dry film, the content of the surfactant is preferably 0 to 20% by mass, more preferably 0.1 to 10% by mass, particularly preferably 0.2 to 5% by mass, based on the mass of the polyurethane resin.

Artificial leather is generally produced using a flexible sheet with excellent crease recovery that is obtained by impregnating a fibrous base with a polymer elastic material such as a polyurethane resin and then allowing the polymer elastic material to coagulate. Further, as required, the surface layer of the sheet in which the polymer elastic material has been coagulated is subjected to napping and dyeing, thereby an artificial leather having fine fibers in the surface layer (nap layer) can be obtained.

Examples of a method of incorporating a polyurethane resin into an active fibrous base include a method in which a polyurethane resin is added to a fibrous base by impregnating the fibrous base with a polyurethane resin composition dissolved or dispersed in the above-described solvent and the resultant is then nipped using a mangle to, for example, adjust the amount of the added polyurethane resin, followed by drying to coagulate and solidify the polyurethane resin.

In cases where the polyurethane resin is in a solution form, the polyurethane resin solution is coated on a fibrous base and the thus coated fibrous base is subsequently immersed into a liquid in which the polyurethane resin is insoluble, thereby the polyurethane resin can be coagulated.

As a method of coagulating the water-dispersed polyurethane resin after the impregnation, for example, a dry-heat coagulation method, a wet-heat coagulation method or a wet coagulation method can be employed. In addition, by using a heat-sensitive coagulant (an auxiliary agent which coagulates polyurethane resins at a temperature of 100°C or lower) in combination with the water-dispersed polyurethane resin, heat-sensitive coagulation properties can be imparted to the polyurethane resin, although this process is not particularly restricted. This polyurethane resin can be coagulated by further subjecting it to a wet-heat treatment. In this case, a phenomenon of uneven distribution of the polyurethane resin in the surface layer of the fibrous base, which occurs in association with evaporation of water at the time of drying, is inhibited, so that the polyurethane resin can be uniformly impregnated into the fibrous base.

Examples of the heat-sensitive coagulant include organic acid salts, inorganic salts, polyvinyl methyl ethers, silicone polyether copolymers and polysiloxanes. When added, these heat-sensitive coagulants function to destabilize the hydrated state of an emulsion of the water-dispersed polyurethane resin, disrupt the hydrated structure of the emulsion at a certain temperature or higher and thereby allow the polyurethane resin to aggregate.

Examples of the organic acid salts include neutral salts formed by a neutralizer and a carboxylic acid having 1 to 20 carbon atoms (e.g., formic acid, acetic acid, propionic acid or malic acid) or sulfamic acid. As the neutralizer, those that are exemplified above as neutralizers of compounds having an anionic group and an active hydrogen can be used.

Examples of the inorganic salts include alkali metal salts, alkaline earth metal salts, magnesium salts and ammonium salts.

Examples of the alkali metal salts include the followings:

i) alkali metal carbonates
for example, sodium carbonate, sodium hydrogen carbonate, potassium carbonate, potassium hydrogen carbonate and lithium carbonate;
ii) alkali metal sulfates
for example, sodium sulfate and potassium sulfate;
iii) alkali metal nitrates
for example, sodium nitrate and potassium nitrate;
iv) alkali metal phosphates
for example, sodium phosphate, sodium hydrogen phosphate and potassium phosphate;
v) alkali metal sulfites
for example, sodium sulfite, sodium hydrogen sulfite and potassium sulfite; and
vi) alkali metal halides
for example, sodium chloride, potassium chloride, sodium bromide, potassium iodide and potassium fluoride.

Examples of the alkaline earth metal salts include the followings:

i) alkaline earth metal carbonates
for example, calcium carbonate;
ii) alkaline earth metal sulfates
for example, calcium sulfate;
iii) alkaline earth metal nitrates
for example, calcium nitrate;
iv) alkaline earth metal phosphates
for example, calcium hydrogen phosphate;
v) alkaline earth metal sulfites
for example, calcium sulfite; and
vi) alkaline earth metal halides
for example, calcium chloride, calcium bromide, calcium iodide and calcium fluoride.

Examples of the magnesium salts include the followings: magnesium carbonate, magnesium sulfate, magnesium nitrate, magnesium hydrogen phosphate, magnesium sulfite, magnesium chloride, magnesium bromide, magnesium iodide and magnesium fluoride. Further, examples of the ammonium salts include ammonium halides (e.g., ammonium chloride and ammonium bromide).

Thereamong, as the heat-sensitive coagulant, organic acid salts and inorganic salts are preferred, and alkaline earth metal salts and magnesium salts are more preferred.

In cases where the polyurethane resin is prepared using a compound having a hydrophilic group and an active hydrogen, from the standpoint of the heat-sensitive coagulation properties thereof, it is preferred to use a surfactant in combination, and it is more preferred to use a nonionic surfactant. Among nonionic surfactants, it is particularly preferred to use one having a clouding point of 40°C to 180°C.

In cases where the polyurethane resin is dispersed in an aqueous medium as particles, the heat-sensitive coagulation temperature of the resulting polyurethane resin composition is, from the standpoints of its storage stability and the texture of fiber product obtained therefrom after processing, preferably 40 to 90°C, more preferably 50 to 80°C. The heat-sensitive coagulation temperature of the polyurethane resin composition can be determined by heating the polyurethane resin composition and measuring the temperature at which the polyurethane resin composition is coagulated and no longer shows fluidity.

Meanwhile, before incorporating the polyurethane resin into the fibrous base, by adding a material that inhibits adhesion between ultrafine fibers and a cellulose derivative, polyvinyl alcohol (hereinafter, may be abbreviated as "PVA") or the like (such a material may be hereinafter referred to as "inhibitor"), not only the adhesiveness between the ultrafine fibers and the polyurethane resin can be reduced but also soft texture can be achieved. The addition of the inhibitor can be performed before or after a sea removal treatment of fibers having a sea-island type structure. After the sea removal treatment, the unit weight of the fibers is reduced by an amount corresponding to the amount of the removed sea, and this leads to a reduction in the tensile strength of the resulting sheet. Since the tensile strength of the sheet can be improved by adding the inhibitor before the sea removal treatment, elongation of the sheet caused by tension applied during processing can be inhibited. Accordingly, even when the sheet is thin, elongation of the sheet caused by tension applied during processing is not likely to occur and the sheet is unlikely to be broken. In addition, since the thickness of the fibrous base can be maintained in the sea removal treatment step, densification of the fibrous base can be inhibited. On the other hand, densification of the fibrous base can be realized by adding the inhibitor after the sea removal treatment. Therefore, it is preferred that the timing of adding the inhibitor be adjusted as appropriate in accordance with the purpose thereof.

An embodiment where the sheet-like article, in which the polyurethane resin is incorporated, is cut in half along the thickness direction or separated into several pieces is preferred because excellent production efficiency is thereby attained.

It is preferred that the sheet-like article of the present invention have a compression ratio of 13% to 20% and a compressive elastic modulus of 55% to 75%. When the compression ratio is low, the sheet-like article is too hard as an artificial leather. When the compression ratio is high, although the sheet-like article has excellent flexibility, it is too soft as an artificial leather and wrinkles are likely to be generated when molded. Meanwhile, when the compressive elastic modulus is low, the crease recovery of the sheet-like article tends to be poor for an artificial leather, whereas when the compression ratio is high, although the sheet-like article has excellent resilience, the tension thereof tends to be too strong for an artificial leather.

Before a napping treatment performed for the production of artificial leather, a lubricant such as silicone emulsion may be added to the sheet-like article. Further, from the standpoint of preventing deposition of powder generated from the sheet-like article by grinding onto a sandpaper, it is a preferred embodiment to add an antistatic agent before the napping treatment.

In order to form naps on the surface of the sheet-like article, a napping treatment can be performed. For the napping treatment, a method of grinding the surface with a sandpaper, a roll sander or the like can be employed.

When the sheet-like article is too thin, the physical properties thereof such as tensile strength and tearing strength are poor, whereas an excessively thick sheet-like article has hard texture; therefore, the thickness of the sheet-like article is preferably 0.1 to 5.0 mm or so.

The sheet-like article can be dyed. As a dyeing method, it is preferred to use a jet dyeing machine because it is capable of dyeing the sheet-like article and, at the same time, applying a crumpling effect to soften the sheet-like article. An excessively high dyeing temperature may cause degradation of polyurethane, whereas an excessively low dyeing temperature makes adhesion of a dye to the fibers insufficient; therefore, it is appropriate to set the dyeing temperature in accordance with the fiber type, and the dyeing temperature is preferably 80°C to 150°C, more preferably 110°C to 130°C.

The dye can be selected in accordance with the type of the fibers constituting the fibrous base and, for example, a disperse dye may be used for polyester fibers. For polyamide fibers, an acidic dye, a metal-containing dye or a combination thereof may be used. When the dyeing is performed using a disperse dye, the thus dyed sheet-like article may be subsequently subjected to reduction cleaning.

Further, it is also a preferred embodiment to use a dyeing aid in the dyeing. By using a dyeing aid, the uniformity and reproducibility of dyeing can be improved. In addition, simultaneously with the dyeing in the same bath or after the dyeing, the sheet-like article may be subjected to a finishing treatment using a softening agent such as silicone, an antistatic agent, a water repellent, a flame retardant, a light stabilizer, an antimicrobial agent and/or the like.

The sheet-like article obtained in accordance with the present invention can be mainly used as an artificial leather. The sheet-like article can also be used as, for example, interior materials that have very elegant appearance as skin materials for furniture, chairs and wall materials, as well as seats, ceilings, interiors and the like in the compartment of vehicles such as automobiles, trains and airplanes; clothing materials for shirts, jackets, and uppers and trims of casual shoes, sports shoes, men's shoes, women's shoes and the like, as well as bags, belts, wallets, and parts of these items; and industrial materials such as wiping clothes, abrasive clothes and CD curtains.

EXAMPLES

The sheet-like article of the present invention and a production method thereof will now be described in more detail by way of examples thereof; however, the present invention is not restricted to the following examples by any means.

[Evaluation Methods]

(1) Texture of Sheet-like Article:

A. Compression Ratio

As a guideline for the evaluation of the flexibility of a sheet-like article, in accordance with the compression ratio measurement method prescribed in JIS L1096-8.20 (2010), three 3 cm × 3 cm test pieces were laminated and left to stand for 1 minute under a standard pressure of 50 gf/cm$^2$ (4.9 kPa), after which the thickness (To: mm) of the resulting laminate was measured. Then, the laminate was left to stand for 1 minute under a pressure of 300 gf/cm$^2$ (29.4 kPa) and the thickness thereof ($T_1$: mm) was measured. Using the thickness values obtained by the above-described measurement method and the following formula, the compression ratio ($C_r$: %) was calculated:

$$C_r = (T_0 - T_1)/T_0 \times 100$$

B. Compressive Elastic Modulus

As a guideline for the evaluation of the crease recovery of a sheet-like article, in accordance with the compression ratio measurement method prescribed in JIS L1096-8.20 (2010), three 3 cm × 3 cm test pieces were laminated and left to stand for 1 minute under a standard pressure of 50 gf/cm$^2$ (4.9 kPa), after which the thickness ($T_0$: mm) of the resulting laminate was measured. Next, the laminate was left to stand for 1 minute under a pressure of 300 gf/cm$^2$ (29.4 kPa) and the thickness thereof ($T_1$: mm) was measured. Then, after removing the pressure and again leaving the laminate for 1 minute under the standard pressure, the thickness thereof ($T_2$: mm) was measured. Using the thickness values obtained by the above-described measurement method and the following formula, the compressive elastic modulus ($C_e$: %) was calculated:

$$C_e = (T_2 - T_1)/(T_0 - T_1) \times 100.$$

(2) Content of Urethane Group and Urea Group in Polyurethane Resin:

The term "content of urethane group and urea group" in a polyurethane resin refers to a ratio of the total mass of urethane groups and urea groups in the polyurethane resin, which is calculated by the following formula:

$$\bullet \text{ Content of urethane group and urea group (\%)} = [\text{Total mass of urethane}$$

$$\text{groups (-NHCOO-) and/or urea groups (-NHCONH- and -NHCON<)/Mass of}$$

$$\text{polyurethane resin}] \times 100$$

The urethane group concentration and the urea group concentration can be calculated from the amount of the raw material used for polyurethane polymerization, or can be measured by the below-described analysis method after sampling polyurethane from the subject sheet-like article.
The urethane group concentration and urea group concentration of a polyurethane resin are calculated from the nitrogen atom content quantified by a nitrogen analyzer [e.g., ANTEK 7000 (manufactured by Antek Instruments, Inc.)] and the ratio of urethane groups and urea groups determined by $^1$H-NMR. In the $^1$H-NMR measurement, when an aliphatic isocyanate is used, the mass ratio between urea groups and urethane groups is determined from the ratio between the area of a peak attributed to urea group-originated hydrogen at a chemical shift of about 6 ppm and the area of a peak attributed to urethane group-originated hydrogen at a chemical shift of about 7 ppm, and the urethane group concentration and the urea group concentration are calculated based on this mass ratio and the above-described nitrogen atom content. When an aromatic isocyanate is used, the mass ratio between urea groups and urethane groups is determined from the ratio between the area of a peak attributed to urea group-originated hydrogen at a chemical shift of about 8 ppm and the area of a peak attributed to urethane group-originated hydrogen at a chemical shift of about 9 ppm, and the urethane group concentration and the urea group concentration are calculated based on this mass ratio and the above-described nitrogen atom content.

Further, for a polyurethane resin that has a cross-linked structure in the molecule and is hardly soluble to solvents, the isocyanate component thereof can be recovered as an amine by hydrolyzing the polyurethane resin in a basic condition of sodium hydroxide, pyridine or the like. Then, each component is analyzed by FT-IR, NMR, GC-MS and/or LC-MS, and the content of urethane group and that of urea group are evaluated.

(3) Measurement of Viscosity of Polycarbonate Polyol

The subject polycarbonate polyol was maintained at 40°C and the viscosity thereof was measured using a rotational viscometer (B-type viscometer) at a rotation speed of 30 rotations/min.

(4) Measurement of Melting Point of Polycarbonate Polyol

The melting point was measured using DSC Q20 manufactured by TA Instruments. A sample was heated from room temperature to 100°C at a rate of 20°C/min, cooled to -100°C at a rate of 90°C/min and then heated back to 100°C at a rate of 20°C/min to observe heat generation and absorption. In a DSC curve obtained for heating from -80°C to 100°C, the melting point was determined as the temperature of an intersection formed by a line extended from the baseline before the start of heat absorption caused by melting and a tangent line that passes through the inflection point between the start of heat absorption and the top of an endothermic peak.

(5) Polymer Polyol in Polyurethane Resin:

The subject polyurethane resin was dissolved in a DMF solution and analyzed by NMR, IR, GC-MS, LC-MS, pyrolysis GC-MS and SEC to determine the type(s) (polycarbonate polyol, polyester polyol or polyether polyol) of polymer polyol(s) constituting the polyurethane resin as well as the mass ratio of each polyol yielding the polyurethane resin. When the subject polyurethane resin was hardly soluble in DMF, the polyurethane resin was hydrolyzed and degraded into the respective components in a basic condition of sodium hydrogen, pyridine or the like and then analyzed.

(6) Viscoelastic Properties of Polyurethane Resin Film:

For a 200-$\mu$m thick film of the subject polyurethane resin, the storage elastic modulus (E') and tan $\delta$ were measured at a frequency of 11 Hz using a storage elastic modulus analyzer (RHEOGEL E4000, manufactured by UBM).

(7) Martindale Abrasion Evaluation (Evaluation of Durability):

Using Model 406 manufactured by James H. Heal & Co. as a Martindale abrasion tester and ABRASIVE CLOTH SM25 manufactured by James H. Heal & Co. as a standard abrasive cloth, a sample was rubbed 20,000 times with a load equivalent to 12 kPa. Then, the outer appearance of the sample artificial leather was visually observed and evaluated. As for the evaluation criteria, an evaluation of "Grade 5" was given to an artificial leather whose outer appearance did not change at all before and after abrasion; an evaluation of "Grade 1" was given to an artificial leather on which pillings were generated in a large number; and the grades therebetween were set with an increment of 0.5.

Further, as an evaluation of light resistance, after subjecting a sample to a forced deterioration treatment in which the sample was irradiated with light having a wavelength of 300 to 400 nm for 150 hours using a Xenon weather meter equipped with a 150-W/m$^2$ xenon lamp (manufactured by Suga Test Instruments Co., Ltd.), the above-described Martindale abrasion evaluation was conducted.

(8) Appearance Quality of Sheet-like Article:

The appearance quality of a sheet-like article was evaluated by a total of 20 evaluators consisting of 10 healthy adult males and 10 healthy adult females. Visual and sensory evaluations were performed based on the following five criteria, and the evaluation given by the largest number of evaluators was taken as the appearance quality of the sheet-like article. Grades 4 and 5 were regarded as good appearance quality.

Grade 5: Fibers were uniformly napped and in a well-dispersed state, and the outer appearance was good.
Grade 4: This is an evaluation between Grade 5 and Grade 3.
Grade 3: The dispersion state of fibers was rather not good in some parts; however, the fibers were napped and the outer appearance was rather good.

Grade 2: This is an evaluation between Grade 3 and Grade 1.
Grade 1: The dispersion state of fibers was very poor as a whole, and the outer appearance was defective.

[Method of Preparing Polyurethane Resin Compositions]

[Preparation of Polyurethane Resin Composition A] [Polyurethane Solution]

To a reaction vessel equipped with a stirrer and a heater, 173 parts by mass of a polycarbonate diol having an Mn of 2,000 ["DURANOL" (registered trademark) G4672, manufactured by Asahi Kasei Chemicals Corporation], 43 parts by mass of a polytetramethylene glycol having an Mn of 2,000 ("PTMG2000", manufactured by Mitsubishi Chemical Corporation), 9.1 parts by mass of 1,4-butanediol and 71 parts by mass of 4,4'-diphenylmethane diisocyanate were loaded, and these materials were heated to a temperature of 80°C under a dry nitrogen atmosphere and thereby allowed to undergo urethanization reaction for 3 hours to produce an isocyanate group-containing urethane prepolymer. After allowing the inside of the vessel to cool to a temperature of 40°C, 650 parts by mass of DMF was added and uniformly dissolved. Then, a solution prepared by dissolving 1.3 parts by mass of water in 52 parts by mass of DMF was added and allowed to react for 6 hours at a temperature of 55°C, and 1.0 part by mass of methanol was further added and allowed to react for 1 hour at a temperature of 55°C. Thereafter, 1.5 parts by mass of a hindered phenol-based antioxidant ["IRGANOX" (registered trademark) 1010, manufactured by BASF Ltd.], 3.0 parts by mass of a benzotriazole-based ultraviolet absorber ["TINUVIN" (registered trademark) 571, manufactured by BASF Ltd.] and 3.0 parts by mass of a hindered amine-based light stabilizer ["TINUVIN" (registered trademark) 144, manufactured by BASF Ltd.] were added, and the resultant was uniformly dissolved to obtain a polyurethane resin composition A.

[Preparation of Polyurethane Resin Composition B] [Polyurethane Solution]

To a reaction vessel equipped with a stirrer and a heater, 98 parts by mass of a polycarbonate diol having an Mn of 2,000 ["DURANOL" (registered trademark) T5652, manufactured by Asahi Kasei Chemicals Corporation], 98 parts by mass of a copolymer diol of THF and 3-methyltetrahydrofuran, which had an Mn of 2,000 ("PTG-L2000", manufactured by Hodogaya Chemical Co., Ltd.), 1.8 parts by mass of ethylene glycol and 30 parts by mass of a mixture of 2,4-tolylene diisocyanate and 2,6-tolylene diisocyanate ["CORONATE" (registered trademark) T-80, manufactured by Nippon Polyurethane Industry Co., Ltd.] were loaded, and these materials were heated to a temperature of 80°C under a dry nitrogen atmosphere and thereby allowed to undergo urethanization reaction for 3 hours to produce an isocyanate group-containing urethane prepolymer. After allowing the inside of the vessel to cool to a temperature of 40°C, 712 parts by mass of DMF was added and uniformly dissolved. Then, a solution prepared by dissolving 7.1 parts by mass of isophoronediamine in 52 parts of DMF was added and allowed to react for 6 hours at a temperature of 55°C, and 2.3 parts by mass of *n*-butanol was further added and allowed to react for 1 hour at a temperature of 55°C, thereby obtaining a polyurethane resin composition B.

[Preparation of Polyurethane Resin Composition C] [Polyurethane Solution]

To a reaction vessel equipped with a stirrer and a heater, 86 parts by mass of a polycarbonate diol having an Mn of 2,000 ["KURARAY POLYOL" (registered trademark) C-2090, manufactured by Kuraray Co., Ltd.], 129 parts by mass of a polytetramethylene glycol having an Mn of 3,000 ("PTMG3000", manufactured by Mitsubishi Chemical Corporation), 0.3 parts by mass of 1,4-butanediol and 27 parts by mass of HDI were loaded, and these materials were heated to a temperature of 80°C under a dry nitrogen atmosphere and thereby allowed to undergo urethanization reaction for 3 hours to produce an isocyanate group-containing urethane prepolymer. After allowing the inside of the vessel to cool to a temperature of 40°C, 710 parts by mass of DMF was added and uniformly dissolved. Then, a solution prepared by dissolving 4.0 parts by mass of ethylenediamine in 48 parts by mass of DMF was added and allowed to react for 6 hours at a temperature of 55°C, and 1.0 part by mass of methanol was further added and allowed to react for 1 hour at a temperature of 55°C, thereby obtaining a polyurethane resin composition C.

[Preparation of Polyurethane Resin Composition D] [Polyurethane Dispersion]

To a simple pressure reaction apparatus equipped with a stirrer and a heater, 173 parts by mass of a polycarbonate diol having an Mn of 2,000 ["DURANOL" (registered trademark) T5652, manufactured by Asahi Kasei Chemicals Corporation], 115 parts by mass of a polytetramethylene glycol having an Mn of 2,000 ("PTMG2000", manufactured by Mitsubishi Chemical Corporation), 5.1 parts by mass of 1,4-butanediol, 6.7 parts by mass of 2,2-dimethylol propionic acid, 98 parts by mass of hydrogenated MDI and 214 parts by mass of acetone were loaded. Then, these materials were heated to a temperature of 90°C under a dry nitrogen atmosphere and thereby allowed to undergo urethanization reaction for 10 hours to produce an isocyanate group-containing urethane prepolymer. After cooling the reaction solution to a temperature of 40°C, 4.0 parts by mass of a 14-mole EO adduct of hexadecyl alcohol and 5.0 parts by mass of triethylamine were added thereto and the resultant was mixed and, by further adding 500 parts by mass of water and emulsifying the resultant using a rotor/stator-type mechanical emulsifier, an aqueous dispersion was obtained. While stirring the thus obtained aqueous dispersion, an aqueous solution prepared by dissolving 2.4 parts by mass of ethylenediamine in 63 parts by mass of water was added thereto, and the resultant was stirred at a temperature of 50°C for 5 hours to perform chain extension reaction. Thereafter, acetone was removed by distillation at a temperature of 65°C under reduced pressure to obtain a polyurethane resin composition D.

[Preparation of Polyurethane Resin Composition E] [Polyurethane Dispersion]

To a simple pressure reaction apparatus equipped with a stirrer and a heater, 186 parts by mass of a polycarbonate diol having an Mn of 2,000 ["KURARAY POLYOL" (registered trademark) C-2090, manufactured by Kuraray Co., Ltd.], 152 parts by mass of a copolymer diol of THF and 3-methyltetrahydrofuran, which had an Mn of 2,000 ("PTG-L2000", manufactured by Hodogaya Chemical Co., Ltd.), 2.1 parts by mass of ethylene glycol and 5.7 parts by mass of 2,2-dimethylol butanoic acid, 83 parts by mass of IPDI and 240 parts by mass of acetone were loaded. Then, these materials were heated to a temperature of 90°C under a dry nitrogen atmosphere and thereby allowed to undergo urethanization reaction for 10 hours to produce an isocyanate group-containing urethane prepolymer. After cooling the reaction solution to a temperature of 40°C, 0.9 parts by mass of a hindered phenol-based antioxidant ["IRGANOX" (registered trademark) 1010, manufactured by BASF Ltd.], 1.4 parts by mass of a benzotriazole-based ultraviolet absorber ["TINUVIN" (registered trademark) 571, manufactured by BASF Ltd.], 1.8 parts by mass of a hindered amine-based light stabilizer ["TINUVIN" (registered trademark) 144, manufactured by BASF Ltd.], 13.5 parts by mass of a 14-mole EO adduct of hexadecyl alcohol and 4.0 parts by mass of triethylamine were added thereto, and the resultant was mixed and subsequently emulsified under stirring with an addition of 500 parts by mass of water over a period of 1 hour, thereby obtaining an aqueous dispersion. While stirring the thus obtained aqueous dispersion, a solution prepared by dissolving 8.0 parts by mass of 4,4'-methylenebisaniline in a mixture of 48 parts by mass of water and 46 parts by mass of acetone was added thereto, and the resultant was stirred at a temperature of 50°C for 5 hours to perform chain extension reaction. Thereafter, acetone was removed by distillation at a temperature of 65°C under reduced pressure to obtain a polyurethane resin composition E.

[Preparation of Polyurethane Resin Composition F] [Polyurethane Dispersion]

To a simple pressure reaction apparatus equipped with a stirrer and a heater, 82 parts by mass of a polycarbonate diol having an Mn of 2,000 ["DURANOL" (registered trademark) G4672, manufactured by Asahi Kasei Chemicals Corporation], 185 parts by mass of a polytetramethylene glycol having an Mn of 3,000 ("PTMG3000", manufactured by Mitsubishi Chemical Corporation), 0.1 parts by mass of 1,4-butanediol, 6.6 parts by mass of 2,2-dimethylol butanoic acid, 59 parts by mass of IPDI and 222 parts by mass of acetone were loaded. Then, these materials were heated to a temperature of 90°C under a dry nitrogen atmosphere and thereby allowed to undergo urethanization reaction for 10 hours to produce an isocyanate group-containing urethane prepolymer. After cooling the reaction solution to a temperature of 40°C, 6.9 parts by mass of a 14-mole ethylene oxide adduct of hexadecyl alcohol and 3.6 parts by mass of triethylamine were added thereto and the resultant was mixed and, by further adding 550 parts by mass of water and emulsifying the resultant using a rotor/stator-type mechanical emulsifier, an aqueous dispersion was obtained. While stirring the thus obtained aqueous dispersion, an aqueous solution prepared by dissolving 8.9 parts by mass of isophoronediamine in 98 parts by mass of water was added thereto, and the resultant was stirred at a temperature of 50°C for 5 hours to perform chain extension reaction. Thereafter, acetone was removed by distillation at a temperature of 65°C under reduced pressure, and 19 parts by mass of a carbodiimide-based cross-linking agent ["CARBODILITE" (registered trademark) E-04, manufactured by Nisshinbo Holdings Inc.] was added and mixed with the resultant to obtain a polyurethane resin composition F.

[Preparation of Polyurethane Resin Composition G] [Polyurethane Solution]

To a reaction vessel equipped with a stirrer and a heater, 191 parts by mass of a polycarbonate diol having an Mn of 2,000 ["DURANOL" (registered trademark) T6002, manufactured by Asahi Kasei Chemicals Corporation], 9.4 parts by mass of 1,4-butanediol and 95 parts by mass of 4,4'-diphenylmethane diisocyanate were loaded, and these materials were heated to a temperature of 80°C under a dry nitrogen atmosphere and thereby allowed to undergo urethanization reaction for 3 hours to produce an isocyanate group-containing urethane prepolymer. After allowing the inside of the system to cool to a temperature of 40°C, 650 parts by mass of DMF was added thereto and uniformly dissolved. Then, a solution prepared by dissolving 3.1 parts by mass of water in 52 parts by mass of DMF was added and allowed to react for 6 hours at a temperature of 55°C, and 1.0 part by mass of methanol was further added and allowed to react for 1 hour at a temperature of 55°C, thereby obtaining a polyurethane resin composition G.

[Preparation of Polyurethane Resin Composition H] [Polyurethane Solution]

To a reaction vessel equipped with a stirrer and a heater, 219 parts by mass of a polytetramethylene glycol having an Mn of 2,000 ("PTMG2000", manufactured by Mitsubishi Chemical Corporation), 11.0 parts by mass of ethylene glycol, 50 parts by mass of a mixture of 2,4-tolylene diisocyanate and 2,6-tolylene diisocyanate ["CORONATE" (registered trademark) T-80, manufactured by Nippon Polyurethane Industry Co., Ltd.] and 720 parts by mass of DMF were loaded, and these materials were heated to a temperature of 70°C under a dry nitrogen atmosphere and thereby allowed to undergo urethanization reaction for 15 hours. Then, 1.0 part by mass of methanol was added and the resultant was further allowed to react at a temperature of 55°C for 1 hour, thereby obtaining a polyurethane resin composition H.

[Preparation of Polyurethane Resin Composition I] [Polyurethane Dispersion]

To a simple pressure reaction apparatus equipped with a stirrer and a heater, 241 parts by mass of a polycarbonate diol having an Mn of 2,000 ["DURANOL" (registered trademark) T5652, manufactured by Asahi Kasei Chemicals Corporation], 17.2 parts by mass of 1,4-butanediol, 9.5 parts by mass of 2,2-dimethylol propionic acid, 130 parts by mass of hydrogenated MDI and 214 parts by mass of acetone were loaded. Then, these materials were heated to a temperature of 90°C under a dry nitrogen atmosphere and thereby allowed to undergo urethanization reaction for 10 hours to produce an isocyanate group-containing urethane prepolymer. After cooling the reaction solution to a temperature of 40°C, 1.5 parts by mass of a hindered phenol-based antioxidant ["IRGANOX" (registered trademark) 1010, manufactured by BASF Ltd.], 2.3 parts by mass of a benzotriazole-based ultraviolet absorber ["TINUVIN" (registered trademark) 571, manufactured by BASF Ltd.], 2.3 parts by mass of a hindered amine-based light stabilizer ["TINUVIN" (registered trademark) 144, manufactured by BASF Ltd.], 4.0 parts by mass of a 14-mole ethylene oxide adduct of hexadecyl alcohol and 8.6 parts by mass of triethylamine were added thereto and the resultant was mixed and, by further adding 550 parts by mass of water and emulsifying the resultant using a rotor/stator-type mechanical emulsifier, an aqueous dispersion was obtained. While stirring the thus obtained aqueous dispersion, an aqueous solution prepared by dissolving 2.8 parts by mass of isophoronediamine in 45 parts by mass of water was added thereto, and the resultant was stirred at a temperature of 50°C for 5 hours to perform chain extension reaction. Thereafter, acetone was removed by distillation at a temperature of 65°C under reduced pressure to obtain a polyurethane resin composition I.

[Preparation of Polyurethane Resin Composition J] [Polyurethane Dispersion]

To a simple pressure reaction apparatus equipped with a stirrer and a heater, 407 parts by mass of a polytetramethylene glycol having an Mn of 3,000 ("PTMG3000", manufactured by Mitsubishi Chemical Corporation), 13.2 parts by mass of 2,2-dimethylol butanoic acid, 80 parts by mass of IPDI and 333 parts by mass of acetone were loaded. Then, these materials were heated to a temperature of 90°C under a dry nitrogen atmosphere and thereby allowed to undergo urethanization reaction for 10 hours to produce an isocyanate group-containing urethane prepolymer. After cooling the reaction solution to a temperature of 40°C, 10.0 parts by mass of a 14-mole ethylene oxide adduct of hexadecyl alcohol and 7.2 parts by mass of triethylamine were added thereto and the resultant was mixed and, by further adding 497 parts by mass of water and emulsifying the resultant using a rotor/stator-type mechanical emulsifier, an aqueous dispersion was obtained. The thus obtained aqueous dispersion was stirred at a temperature of 50°C for 5 hours to perform chain extension reaction. Thereafter, acetone was removed by distillation at a temperature of 65°C under reduced pressure, and 20 parts by mass of an oxazoline-based cross-linking agent ("EPOCROS WS-500", manufactured by Nippon Shokubai Co., Ltd.) was added and mixed with the resultant to obtain a polyurethane resin composition J.

The formations and properties of the polyurethane resin compositions A to J each prepared in the above-described manner are summarized in Tables 1 and 2.

[Table 1]

[Table 1]

| | | Example | | | | | |
|---|---|---|---|---|---|---|---|
| [Polyurethane resin composition | | A | B | C | D | E | F |
| Physical properties of amorphous Polycarbonate polyol | Melting point (°C) | 10 | ≤ -5 | ≤ -20 | ≤ -5 | ≤ -20 | 10 |
| | Viscosity (mPa·s at 40°C) | 37.000 | 22.000 | 18.000 | 22.000 | 18.000 | 37.000 |

(continued)

| [Polyurethane resin composition | | Example | | | | | |
|---|---|---|---|---|---|---|---|
| | | A | B | C | D | E | F |
| Mass ratio | Amorphous Polycarbonate polyol Crystal-containing polycarbonate polyol | 100/0 | 100/0 | 100/0 | 100/0 | 100/0 | 1000 |
| | Polycarbonate polyol (Polyester polyol and polyether polyol) | 80/20 | 50/50 | 4060 | 6040 | 55, 45 | 31/69 |
| [Polyurethane resin (P) | Urethane group concentration (% by mass) | 8.4 | 6.6 | 4.4 | 7.4 | 6.6 | 5.3 |
| | Urea group concentration (% by mass) | 1.5 | 2.2 | 3.3 | 2.4 | 2.2 | 2.9 |
| | Total of urethane group concentration and urea group concentration (% by mass) | 9.9 | 8.8 | 7.7 | 9.8 | 8.8 | 8.2 |
| | E' (MPa at 20°C) | 17.8 | 13.6 | 10.2 | 22.0 | 16.2 | 14.7 |
| | tan $\delta$ (at 20°C) | 0.11 | 0.10 | 0.09 | 0,19 | 0.18 | 0.17 |

[Table 2]

[Table 2]

| | | Comparative Example | | | |
|---|---|---|---|---|---|
| Polyurethane resin composition | | G | H | I | J |
| Physical properties of amorphous polycarbonate polyol | Melting point (°C) | - | - | $\leq$ -5 | - |
| | Viscosity (mPa·s at 40°C) | - | - | 22.000 | - |
| Mass ratio | Amorphous polycarbonate polyol Crystal-containing polycarbonate polyol | 0/100 | - | 100/0 | - |
| | Polycarbonate polyol(Polyester polyol and polyether polyol) | 100/0 | 0/100 | 100/0 | 0/100 |
| Polyurethane resin (P) | Urethane group concentration (% by mass) | 8.1 | 11.9 | 11.4 | 5.3 |
| | Urea group concentration (% by mass) | 3.5 | 0.1 | 1.9 | 1.5 |
| | Total of urethane group concentration and urea group concentration (% by mass) | 11.6 | 12.0 | 13.3 | 6.8 |
| | E' (MPa at 20°C) | 72.1 | 13.9 | 81.0 | 7.2 |
| | tan $\delta$ (at 20°C) | 0.27 | 0.08 | 0.29 | 0.12 |

[Example 1]

Using a polystyrene as a sea component and a polyethylene terephthalate as an island component, sea-island type composite fibers having 16 islands per filament and an average fiber diameter of 20 $\mu$m, which were composed at a ratio of 20% by mass of the sea component and 80% by mass of the island component, were obtained. The thus obtained sea-island type composite fibers were cut at a length of 51 mm to prepare staples, which were subsequently passed through a carding machine and a cross-lapper to form fiber webs. The thus obtained webs were laminated, and the resulting laminate was needle-punched to produce a nonwoven fabric.

The nonwoven fabric obtained in this manner was allowed to shrink by immersion in a 97°C hot bath containing 5% by mass of a polyvinyl alcohol (PVA) which was derived from a polyvinyl acetate and had a saponification degree of 88% and a polymerization degree of 500, and the thus shrunk nonwoven fabric was dried at a temperature of 110°C for 10 minutes. Subsequently, the resulting sheet base was immersed in trichloroethylene to dissolve and remove the sea component of the fibers, thereby obtaining a sea-removed sheet composed of ultrafine fibers. Next, this sheet was immersed in a dimethylformamide (DMF) solution of the polyurethane resin composition A, which had been adjusted to a solid concentration of 12%, and polyurethane was allowed to coagulate in an aqueous solution having a DMF concentration of 30%. Then, PVA and DMF were remove with hot water, and the resulting sheet was dried with 110°C hot air for 10 minutes to obtain a base sheet for sheet-like article that contained polyurethane in an amount of 35% by mass with respect to the amount of the ultrafine fibers.

Thereafter, using a cutting machine equipped with an endless band knife, the thus obtained base sheet for sheet-like article was cut in half in the direction perpendicular to the thickness direction. The surface of the uncut side was ground using a 120-mesh sandpaper and then a 240-mesh sandpaper to perform a napping treatment. Further, the resulting sheet was dyed with a disperse dye using a circular dyeing machine and then subjected to reduction cleaning, thereby obtaining a sheet-like article having a unit weight of 250 g/m$^2$. This sheet-like article had good texture with a compression ratio of 16.1% and a compressive elastic modulus of 71.0% and exhibited good appearance quality, good abrasion resistance and good light resistance.

[Example 2]

After laminating the fiber webs obtained in Example 1, a woven fabric whose twisted warp and weft yarns were both composed of 84 dtex/72 filaments and weave density was 96 × 76 (warp × weft) per inch was laminated on both the front and back of the thus laminated fiber webs. Then, the resulting laminate was needle-punched to produce a nonwoven fabric, and the mass of polyurethane therein with respect to the mass of the ultrafine fibers was adjusted to 30% by mass. A sheet-like article having a unit weight of 400 g/m$^2$ was obtained in the same manner as in Example 1, except the above-described operations. This sheet-like article had good texture with a compression ratio of 14.5% and a compressive elastic modulus of 69.2% and exhibited good appearance quality, good abrasion resistance and good light resistance.

[Example 3]

A sheet-like article having a unit weight of 300 g/m$^2$ was obtained in the same manner as in Example 1, except that the polyurethane resin composition B was impregnated into the sheet base. The thus obtained sheet-like article had good texture with a compression ratio of 17.5% and a compressive elastic modulus of 72.3% and exhibited good appearance quality, good abrasion resistance and good light resistance.

[Example 4]

A sheet-like article having a unit weight of 196 g/m$^2$ was obtained in the same manner as in Example 1, except that the polyurethane resin composition C was impregnated into the sheet base. The thus obtained sheet-like article had good texture with a compression ratio of 18.0% and a compressive elastic modulus of 72.8% and exhibited good appearance quality, good abrasion resistance and good light resistance.

[Example 5]

Using a polyethylene terephthalate copolymerized with 8 mol% of sodium 5-sulfoisophthalate as a sea component and a polyethylene terephthalate as an island component, sea-island type composite fibers having 16 islands per filament and an average fiber diameter of 20 μm, which were composed at a ratio of 20% by mass of the sea component and 80% by mass of the island component, were obtained. The thus obtained sea-island type composite fibers were cut at a length of 51 mm to prepare staples, which were subsequently passed through a carding machine and a cross-lapper to form fiber webs, and the fiber webs were needle-punched to produce a nonwoven fabric.

The nonwoven fabric obtained in this manner was allowed to shrink by immersion in 97°C hot water and then dried at 100°C for 5 minutes. Then, a liquid was prepared by adding 3 parts by mass of sodium hydrogen carbonate ("CELLMIC 266", manufactured by Sankyo Kasei Co., Ltd.) and 1% by mass of magnesium sulfate with respect to the polyurethane solid content of the polyurethane resin composition D adjusted to have a solid concentration of 20%. The nonwoven fabric obtained above was impregnated with this liquid and treated at a temperature of 97°C and a humidity of 100% for 5 minutes. Thereafter, the resulting sample was dried with hot air at 110°C for 15 minutes to obtain a sheet in which water-dispersed polyurethane resin was incorporated and the polyurethane content was 35% by mass with respect to the amount of the island component of the fibers of the nonwoven fabric.

Next, the thus obtained sheet was treated for 25 minutes by immersion in an aqueous sodium hydroxide solution which had been heated to 95°C and had a concentration of 10 g/L, thereby obtaining a sheet in which the sea component of the sea-island type composite fibers was removed. The surface of the thus obtained sheet had an average fiber diameter of 4.2 $\mu$m. Then, using a cutting machine equipped with an endless band knife, this sheet was cut in half in the direction perpendicular to the thickness direction. The surface of the uncut side was ground using a 120-mesh sandpaper and then a 240-mesh sandpaper to perform a napping treatment. Further, the resulting sheet was dyed with a disperse dye using a circular dyeing machine and then subjected to reduction cleaning, thereby obtaining a sheet-like article having a unit weight of 262 g/m$^2$. This sheet-like article had good texture with a compression ratio of 13.1% and a compressive elastic modulus of 61.5% and exhibited good appearance quality, good abrasion resistance and good light resistance.

[Example 6]

A sheet-like article having a unit weight of 202 g/m$^2$ was obtained in the same manner as in Example 5, except that the polyurethane resin composition E was impregnated into the sheet base. The thus obtained sheet-like article had good texture with a compression ratio of 14.0% and a compressive elastic modulus of 65.1% and exhibited good appearance quality, good abrasion resistance and good light resistance.

[Example 7]

The nonwoven fabric obtained in Example 5 was allowed to shrink by immersion in 97°C hot water and subsequently dried at 100°C for 5 minutes to obtain a sheet. Next, this sheet was treated for 25 minutes by immersion in an aqueous sodium hydroxide solution which had been heated to 95°C and had a concentration of 5 g/L, thereby obtaining a sheet in which the sea component of the sea-island type composite fibers was removed. The surface of this sea-removed sheet had an average fiber diameter of 4.2 $\mu$m. Then, a liquid was prepared by adding 3 parts by mass of sodium hydrogen carbonate ("CELLMIC 266", manufactured by Sankyo Kasei Co., Ltd.) and 1% by mass of magnesium sulfate with respect to the polyurethane resin solid content of the polyurethane resin composition E adjusted to have a solid concentration of 20%. The sheet obtained above was impregnated with this liquid, treated at a temperature of 97°C and a humidity of 100% for 5 minutes, and then dried with hot air at 110°C for 15 minutes to obtain a sheet in which water-dispersed polyurethane resin was incorporated and the polyurethane resin content was 35% by mass with respect to the amount of the island component. Thereafter, using a cutting machine equipped with an endless band knife, the thus obtained sheet was cut in half in the direction perpendicular to the thickness direction. The surface of the uncut side was ground using a 120-mesh sandpaper and then a 240-mesh sandpaper to perform a napping treatment. Further, the resulting sheet was dyed with a disperse dye using a circular dyeing machine and then subjected to reduction cleaning, thereby obtaining a sheet-like article having a unit weight of 232 g/m$^2$. This sheet-like article had good texture with a compression ratio of 13.3% and a compressive elastic modulus of 74.1% and exhibited good appearance quality, good abrasion resistance and good light resistance.

[Example 8]

The nonwoven fabric of Example 5 composed of sea-island type composite fibers was passed through a carding machine and a cross-lapper to form fiber webs, which were subsequently laminated. Further, a woven fabric whose twisted warp and weft yarns were both composed of 84 dtex/72 filaments and weave density was 96 $\times$ 76 (warp $\times$ weft) per inch was laminated on both the front and back of the thus laminated fiber webs. Then, the resulting laminate was needle-punched to produce a nonwoven fabric. Thereafter, the polyurethane resin composition F was impregnated into the sheet base, and the mass of polyurethane was adjusted to be 30% with respect to the mass of ultrafine fibers. A sheet-like article having a unit weight of 350 g/m$^2$ was obtained in the same manner as in Example 5, except the above-described operations. This sheet-like article had good texture with a compression ratio of 15.2% and a compressive elastic modulus of 70.2% and exhibited good appearance quality, good abrasion resistance and good light resistance.

[Example 9]

The nonwoven fabric obtained in Example 8 was allowed to shrink by immersion in 97°C hot water and subsequently dried at 100°C for 10 minutes to obtain a sheet. Next, this sheet was treated with a 6% aqueous PVA solution having a saponification degree of 99% and a polymerization degree of 1,400 and subsequently dried at 150°C for 30 minutes. Then, the resulting sheet was treated for 20 minutes by immersion in an aqueous sodium hydroxide solution which had been heated to 95°C and had a concentration of 50 g/L, thereby obtaining a sheet in which the sea component of the sea-island type composite fibers was removed. The surface of this sheet had an average fiber diameter of 4.2 μm. Then, a liquid was prepared by 1% by mass of magnesium sulfate with respect to the polyurethane resin solid content of the polyurethane resin composition E adjusted to have a solid concentration of 20%. The sheet obtained above was impregnated with this liquid, treated for 5 minutes in a wet-hot atmosphere at a temperature of 97°C and a humidity of 100%, and then dried with hot air at 110°C for 15 minutes to obtain a sheet in which water-dispersed polyurethane resin was incorporated and the polyurethane resin content was 30% by mass with respect to the amount of the island component of the sheet. Subsequently, the thus obtained sheet was immersed in 98°C hot water for 10 minutes to remove the added PVA and then dried at 100°C for 10 minutes. Thereafter, using a cutting machine equipped with an endless band knife, the sheet was cut in half in the direction perpendicular to the thickness direction. The surface of the uncut side was ground using a 120-mesh sandpaper and then a 240-mesh sandpaper to perform a napping treatment. Further, the resulting sheet was dyed with a disperse dye using a circular dyeing machine and then subjected to reduction cleaning, thereby obtaining a sheet-like article having a unit weight of 340 g/m$^2$. This sheet-like article had good texture with a compression ratio of 17.1% and a compressive elastic modulus of 65.9% and exhibited good appearance quality, good abrasion resistance and good light resistance.

[Comparative Example 1]

A sheet-like article having a unit weight of 250 g/m$^2$ was obtained in the same manner as in Example 1, except that the polyurethane resin composition G was impregnated into the sheet base. The thus obtained sheet-like article had rather hard texture with a compression ratio of 10.8% and a compressive elastic modulus of 54.1%.

[Comparative Example 2]

A sheet-like article having a unit weight of 255 g/m$^2$ was obtained in the same manner as in Example 1, except that the polyurethane resin composition H was impregnated into the sheet base. The thus obtained sheet-like article had good texture with a compression ratio of 18.3% and a compressive elastic modulus of 70.9%; however, pillings were generated during the abrasion evaluation performed after the forced deterioration treatment and the light resistance was evaluated as poor.

[Comparative Example 3]

A sheet-like article having a unit weight of 238 g/m$^2$ was obtained in the same manner as in Example 5, except that the polyurethane resin composition I was impregnated into the sheet base. The thus obtained sheet-like article had rather hard texture with a compression ratio of 9.9% and a compressive elastic modulus of 49.3%.

[Comparative Example 4]

A sheet-like article having a unit weight of 215 g/m$^2$ was obtained in the same manner as in Example 5, except that the polyurethane resin composition J was impregnated into the sheet base. The thus obtained sheet-like article had good texture with a compression ratio of 15.5% and a compressive elastic modulus of 65.2%; however, pillings were generated during the abrasion evaluation performed after the forced deterioration treatment and the light resistance was evaluated as poor.

The results of Examples 1 to 8 are summarized in Table 3 and the results of Comparative Examples 1 to 4 are summarized in Table 4.

[Table 3]

[Table 3]

| | | Example | | | | | | | | |
|---|---|---|---|---|---|---|---|---|---|---|
| No. | | 1 | 2 | 3 | 4 | 5 | 6 | 7 | 8 | 9 |
| Polyurethane resin composition | | A | A | B | C | D | E | E | F | E |
| Unit weight of sheet-like article | g/m$^2$ | 250 | 400 | 300 | 196 | 262 | 202 | 232 | 350 | 340 |
| Compression ratio | % | 16.1 | 14.5 | 17.5 | 18.0 | 13.1 | 14.0 | 13.3 | 15.2 | 17.1 |
| Compressive elastic modulus | % | 71.0 | 69.2 | 72.3 | 72.8 | 61.5 | 65.1 | 74.1 | 70.2 | 65.9 |

(continued)

| No. | | Example | | | | | | | | |
|---|---|---|---|---|---|---|---|---|---|---|
| | | 1 | 2 | 3 | 4 | 5 | 6 | 7 | 8 | 9 |
| Martindale Abrasion (12 kPa: 20.000 times) | Grade | 4.5 | 4.5 | 4.5 | 4.5 | 4.5 | 4.5 | 4.5 | 4 | 4.5 |
| Martindale Abrasion: after forced deterioration treatment (12 kPa: 20.000 times) | Grade | 4.5 | 4.5 | 4 | 3.5 | 4 | 4.5 | 4.5 | 3.5 | 4.5 |
| Appearance quality | Grade | 5 | 5 | 5 | 5 | 5 | 5 | 5 | 5 | 5 |

[Table 4]

[Table 4]

| No. | | Comparative Example | | | |
|---|---|---|---|---|---|
| | | 1 | 2 | 3 | 4 |
| Polyrethane resin composition | | G | H | I | J |
| Unit weight of sheet-like article | g/m$^2$ | 250 | 255 | 238 | 215 |
| Compression ratio | % | 10.8 | 18.3 | 9.9 | 15.5 |
| Compressive elastic modulus | % | 54.1 | 70.9 | 49.3 | 65.2 |
| Martindale Abrasion (12 kPa: 20.000 times) | Grade | 4.5 | 3.5 | 4.5 | 3.5 |
| Martindale Abrasion: after forced deterioration treatment (12 kPa: 20.000 times) | Grade | 4 | 2 | 4.5 | 2 |
| Appearance quality | Grade | 5 | 3 | 5 | 3 |

**Claims**

1.  A sheet-like article comprising:

    a fibrous base comprising ultrafine fibers; and
    a polyurethane resin as a binder to said fibrous base,
    wherein,
    said polyurethane resin comprises a polymer polyol-derived structure that comprises a polycarbonate polyol-derived structure, and
    said polyurethane resin satisfies the following (I) to (III):

    (I) said polyurethane resin comprises a carbonate bond, and an ether bond and/or an ester bond in the molecule;
    (II) the total content of urethane group and urea group in said polyurethane resin is 7 to 11 % by mass; and
    (III) 80 to 100% by mass of a polycarbonate polyol yielding said polycarbonate polyol-derived structure is a polycarbonate polyol having a melting point of 20°C or lower.

2.  A sheet-like article comprising:

    a fibrous base comprising ultrafine fibers; and
    a polyurethane resin as a binder to said fibrous base,
    wherein,
    said polyurethane resin comprises a polymer polyol-derived structure that comprises a polycarbonate polyol-derived structure, and
    said polyurethane resin satisfies the following (I), (II) and (IV):

(I) said polyurethane resin comprises a carbonate bond, and an ether bond and/or an ester bond in the molecule;

(II) the total content of urethane group and urea group in said polyurethane resin is 7 to 11 % by mass; and

(IV) 80 to 100% by mass of a polycarbonate polyol yielding said polycarbonate polyol-derived structure is a polycarbonate polyol copolymerized with two or more polyhydric alcohols having different carbon skeletons.

3.  The sheet-like article according to claim 2, wherein said polycarbonate polyol copolymerized with two or more polyhydric alcohols having different carbon skeletons has a melting point of 20°C or lower.

4.  The sheet-like article according to any one of claims 1 to 3, which has a compression ratio of 13 to 20% and a compressive elastic modulus of 55 to 75%.

5.  The sheet-like article according to any one of claims 1 to 4, wherein 20 to 90% by mass of said polymer polyol-derived structure contained in said polyurethane resin is derived from a polycarbonate polyol.

6.  The sheet-like article according to any one of claims 1 to 5, wherein 20 to 80% by mass of said polymer polyol-derived structure contained in said polyurethane resin is derived from a polycarbonate polyol.

7.  The sheet-like article according to any one of claims 1 to 6, wherein said polymer polyol-derived structure contained in said polyurethane resin comprises structures derived from a polycarbonate polyol and a polyether polyol;

8.  The sheet-like article according to any one of claims 1 to 7, wherein said binder further comprises an anionic emulsifying agent and/or a cationic emulsifying agent.

9.  The sheet-like article according to any one of claims 1 to 8, wherein a film of said polyurethane resin has a storage elastic modulus of 1 to 70 MPa and a tan $\delta$ value of 0.05 to 0.30 at 20°C.

10. The sheet-like article according to any one of claims 1 to 9, wherein said polycarbonate polyol having a melting point of 20°C or lower or said polycarbonate polyol copolymerized with two or more polyhydric alcohols having different carbon skeletons, which constitutes said polyurethane resin, has a viscosity of 10,000 to 50,000 mPa·s at 40°C.

## INTERNATIONAL SEARCH REPORT

| International application No. |
| --- |
| PCT/JP2014/080213 |

A. CLASSIFICATION OF SUBJECT MATTER
*D06M15/572*(2006.01)i, *C08G18/44*(2006.01)i, *D06M15/568*(2006.01)i, *D06N3/14*(2006.01)i

According to International Patent Classification (IPC) or to both national classification and IPC

B. FIELDS SEARCHED

Minimum documentation searched (classification system followed by classification symbols)
D06M13/00-15/715, D06N1/00-7/06, C08G18/00-18/87, C08G71/00-71/04

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2012-77280 A  (Mitsubishi Chemical Corp.), 19 April 2012 (19.04.2012), claims; paragraphs [0004], [0005], [0011], [0012], [0042], [0043], [0064], [0114], [0116]; examples & EP 2514779 A1 claims; paragraphs [0006], [0007], [0016], [0065], [0067], [0102], [0182], [0185]; examples & WO 2011/074617 A1    & CN 102666626 A & KR 10-2012-0103635 A | 1-10 |
| Y | JP 2006-22221 A  (Sanyo Chemical Industries, Ltd.), 26 January 2006 (26.01.2006), claims 1, 2; paragraphs [0006], [0039], [0066] (Family: none) | 1-10 |

☒ Further documents are listed in the continuation of Box C.    ☐ See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 03 February 2015 (03.02.15) | 10 February 2015 (10.02.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2014/080213

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-62643 A  (Seiren Co., Ltd.), 26 March 2009 (26.03.2009), claim 1; paragraphs [0026], [0027], [0030] (Family: none) | 1-10 |
| A | JP 2002-179759 A  (Asahi Kasei Corp.), 26 June 2002 (26.06.2002), claims; paragraphs [0011], [0025] (Family: none) | 1-10 |
| A | WO 2005/095706 A1  (Toray Industries, Inc.), 13 October 2005 (13.10.2005), entire text & JP 4506754 B          & US 2007/0197116 A1 & EP 1739224 A1         & KR 10-2006-0132982 A & CN 1938476 A | 1-10 |
| A | WO 2013/057099 A1  (BAYER MATERIALSCIENCE AG), 25 April 2013 (25.04.2013), entire text & US 2014/0302734 A      & EP 2769015 A1 & KR 10-2014-0079827 A  & CN 103998679 A & TW 201335463 A | 1-10 |
| A | JP 2011-6834 A  (Sanyo Chemical Industries, Ltd.), 13 January 2011 (13.01.2011), entire text (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H543647 A
- JP 2011214210 A
- JP 2013112905 A
- US 4524104 A
- US 5906704 A